# EUROPEAN PATENT APPLICATION

(11) **EP 1 607 423 A1**
(43) Date of publication of application: **21.12.2005**
(21) Application number: 04720969.7
(22) Date of filing: 16.03.2004
(51) Int. Cl.: C08G 18/38, C08L 75/04, C08K 5/17, C09J 175/04, C09J 201/10

(54) **AQUEOUS SILYLATED URETHANE COMPOSITION, AQUEOUS ADHESIVES FOR WRAPPING, AND AQUEOUS CONTACT ADHESIVES**

(30) Priority: 20.03.2003 JP 2003076822; 04.08.2003 JP 2003285864
(71) Applicant: KONISHI CO., LTD., Osaka-shi, Osaka 541-0045 (JP)
(72) Inventor: HARADA, Kuniharu, c/o Osaka Lab. Konishi Co. Ltd., Osaka-shi, Osaka 538-0053 (JP); MORI, Shigeki, c/o Osaka Lab. Konishi Co., Ltd., Osaka-shi, Osaka 538-0053 (JP); FUKUMOTO, Yoshio, c/o Urawa Rch Lab Konishi Co Ltd, Saitama-shi, Saitama 338-0832 (JP)
(74) Representative: Grünecker, Kinkeldey, Stockmair & Schwanhäusser Anwaltssozietät
(86) International application number: PCT/JP2004/003458
(87) International publication number: WO 2004/083273

(57) **Abstract**

A water-based silylated urethane composition is used as a water-based adhesive that has high safety, develops satisfactory tackiness in a short time and has excellent initial bond strength. The water-based silylated urethane composition contains following Components (A), (B) and (C):
(A) a urethane prepolymer containing an anionic group and a tertiary amino group and having a terminal alkoxysilyl group, the urethane prepolymer (A) being a reaction product of an anionic-group-free polyol compound (A1), an anionic-group-containing polyol compound (A2), a compound (A3) containing a tertiary amino group and an isocyanate-reactive group, a polyisocyanate compound (A4), an alkoxysilane compound (A5) containing an isocyanate-reactive group, and an amine-based chain extender (A6);
(B) a basic compound; and
(C) water

## Description

### Technical Field

The present invention relates to aqueous or water-based silylated urethane compositions, water-based adhesives for wrapping, and water-based contact adhesives. More specifically, it relates to water-based silylated urethane compositions, water-based adhesives for wrapping, and water-based contact adhesives which have high safety, develop excellent tackiness in a short time, have satisfactory initial bond strength and exhibit productivity equivalent to that in the case of using solvent-based adhesives.

### Background Art

Most conventional adhesives for wrapping are solvent-based urethane resin adhesives featured by excellent initial bond strength and satisfactory tackiness. However, demands have been made to provide adhesives having high safety, for solving environmental issues and sick house problems. Consequently, a variety of water-based adhesives has been proposed as adhesives for wrapping, but they are not industrially used in practice, since they develop tack in a long time and show insufficient tackiness.

The present inventors have developed, as a resin composition for water-based adhesives, a water-based silylated urethane composition containing a polymer containing an anionic group and having a terminal alkoxysilyl group (anionic-group-containing, alkoxysilyl group-terminated polymer), as disclosed in Japanese Laid-open (Unexamined) Patent Application Publication No. 2003-48946. The water-based silylated urethane composition uses the anionic-group-containing, alkoxysilyl group-terminated polymer and thereby develops tack in a shorter time and exhibits improved tackiness as compared with conventional water-based adhesives. The composition, however, is still insufficient as compared with solvent-based adhesives and is limited in its usage. Such conventional water-based compositions are still susceptible to improvement in their tackiness and time for tack development. Thus, demands have been made to develop water-based adhesives that have excellent tackiness and develop tackiness in a further shorter time.

### Disclosure of Invention

An object of the present invention is to provide a water-based silylated urethane composition, a water-based adhesive for wrapping, and a water-based contact adhesive which have high safety, develop satisfactory tackiness in a short time and exhibit excellent initial bond strength.

Another object of the present invention is to provide a water-based silylated urethane composition, a water-based adhesive for wrapping and a water-based contact adhesive which can exhibit productivity equivalent to that of the case of using solvent-based adhesives.

After intensive investigations to achieve the above objects, the present inventors have found that a specific water-based silylated urethane composition develops satisfactory tackiness in a short time, has excellent initial bond strength and has high safety owing to being water-based, and that the composition, if used as an adhesive for wrapping, can exhibit productivity equivalent to that of solvent-based adhesives. The present invention has been achieved based on these findings.

Specifically, the present invention provides a water-based silylated urethane composition comprising following Components (A), (B) and (C):
(A) a urethane prepolymer containing an anionic group and a tertiary amino group and having a terminal alkoxysilyl group, the urethane prepolymer (A) being a reaction product of an anionic-group-free polyol compound (A1), an anionic-group-containing polyol compound (A2), a compound (A3) containing a tertiary amino group and an isocyanate-reactive group, a polyisocyanate compound (A4), an alkoxysilane compound (A5) containing an isocyanate-reactive group, and an amine-based chain extender (A6);
(B) a basic compound; and
(C) water

In the water-based silylated urethane composition according to the present invention, the urethane prepolymer (A) containing an anionic group and a tertiary amino group and having a terminal alkoxysilyl group can be an alkoxysilylated urethane prepolymer containing an anionic group and a tertiary amino group and being a reaction product prepared by allowing the anionic-group-free polyol compound (A1) to react with the anionic-group-containing polyol compound (A2), the compound (A3) containing a tertiary amino group and an isocyanate-reactive group, and the polyisocyanate compound (A4) to yield a urethane prepolymer containing an anionic group and a tertiary amino group; allowing the urethane prepolymer to react with the alkoxysilane compound (A5) containing an isocyanate-reactive group to partially alkoxysilylate the terminal isocyanate groups of the urethane prepolymer containing an anionic group and a tertiary amino group to thereby yield a urethane prepolymer containing an anionic group and a tertiary amino group and having partially alkoxysilylated terminals; and allowing residual isocyanate groups in the urethane prepolymer containing an anionic group and a tertiary amino group and having partially alkoxysilylated terminals to react with the amino group of the amine-based chain extender (A6) to thereby carrying out chain extension.

The water-based silylated urethane composition preferably comprises a water-based silanolated urethane prepolymer composition comprising the urethane prepolymer (A) containing an anionic group and a tertiary amino group and having a terminal alkoxysilyl group whose anionic group is neutralized by the basic compound (B) and whose terminal alkoxysilyl group is hydrolyzed by the water (C).

According to the present invention, the anionic-group-containing polyol compound (A2) preferably has carboxyl group as the anionic group and is preferably a dimethylolalkanoic acid.

The compound (A3) containing a tertiary amino group and an isocyanate-reactive group is preferably a tertiary amine compound containing plural isocyanate-reactive groups and is more preferably an N,N-bis(hydroxy-organic group)-N-alkylamine.

The alkoxysilane compound (A5) containing an isocyanate-reactive group for use in the present invention is preferably a secondary-amino-group-containing alkoxysilane compound as a reaction product of an alkoxysilane compound containing at least a primary amino group with an unsaturated carboxylic acid ester and is more preferably a secondary-amino-group-containing alkoxysilane compound as a reaction product of an alkoxysilane compound containing a primary amino group and a secondary amino group with an unsaturated carboxylic acid ester.

In the urethane prepolymer (A) containing an anionic group and a tertiary amino group and having a terminal alkoxysilyl group, the anionic group content is preferably 0.4 meq/g or more, the tertiary amino group content is preferably 0.15 meq/g or more, and the molar ratio of the tertiary amino group to the anionic group is preferably 0.2 to 1.

The molar ratio of the tertiary amino group to the alkoxysilyl group in the urethane prepolymer (A) containing an anionic group and a tertiary amino group and having a terminal alkoxysilyl group is preferably 1.0 to 5.5.

The present invention also includes a water-based adhesive for wrapping and a water-based contact adhesive each of which comprises the water-based silylated urethane composition.

### Brief Description of the Drawings

FIG. 1 is a schematic cross-sectional view showing a cross-sectional shape of a MDF (middle density fiber board) is to be laminated with a polyolefin sheet using a wrapping machine.
FIG. 2 is a schematic cross-sectional view showing a cross-sectional shape of a MDF to be laminated with a polyolefin sheet using a wrapping machine.
FIG. 3 is a schematic cross-sectional view showing a cross-sectional shape of a MDF to be laminated with a polyolefin sheet using a wrapping machine.
FIG. 4 is a schematic cross-sectional view of a MDF having the cross-sectional shape of FIG. 1 and laminated with a polyolefin sheet using a wrapping machine.
FIG. 5 is a schematic cross-sectional view of a MDF having the cross-sectional shape of FIG. 2 and laminated with a polyolefin sheet using a wrapping machine.
FIG. 6 is a schematic cross-sectional view of a MDF having the cross-sectional shape of FIG. 3 and laminated with a polyolefin sheet using a wrapping machine.

### Best Mode for Carrying Out the Invention

The urethane prepolymer (A) containing an anionic group and a tertiary amino group and having a terminal alkoxysilyl group for use in the water-based silylated urethane composition according to the present invention is prepared by the reaction among an anionic-group-free polyol compound (A1), an anionic-group-containing polyol compound (A2), a compound (A3) containing a tertiary amino group and an isocyanate-reactive group, a polyisocyanate compound (A4), an alkoxysilane compound (A5) containing an isocyanate-reactive group, and an amine-based chain extender (A6).

### [Anionic-group-free polyol compound (A1)]

The anionic-group-free polyol compound (A1) (hereinafter referred to as "polyol (A1)") is not specifically limited, as long as it is a compound having no anionic group and containing at least two hydroxyl groups in the molecule. Each of these polyols (A1) can be used alone or in combination.

Examples of the polyol (A1) are polyhydric alcohols, polyether polyols, polyester polyols, polycarbonate polyols, polyolefin polyols, polyacrylic polyols, and castor oil.

Examples of the polyhydric alcohols as the polyol (A1) include ethylene glycol, diethylene glycol, propylene glycol, dipropylene glycol, trimethylene glycol, 1,4-tetramethylenediol, 1,3-tetramethylenediol, 2-methyl-1,3-trimethylenediol, 1,5-pentamethylenediol, neopentyl glycol, 1,6-hexamethylenediol, 3-methyl-1,5-pentamethylenediol, 2,4-diethyl-1,5-pentamethylenediol, glycerol, trimethylolpropane, trimethylolethane, cyclohexanediols (e.g., 1,4-cyclohexanediol), bisphenols (e.g., bisphenol-A), and sugar alcohols (e.g., xylitol and sorbitol).

The polyether polyols include, for example, polyalkylene glycols such as polyethylene glycol, polypropylene glycol, and polytetramethylene glycol; and copolymers each containing plural different alkylene oxides as monomer components (an alkylene oxide-another alkylene oxide), such as ethylene oxide-propylene oxide copolymers.

The polyester polyols include, for example, polycondensates between a polyhydric alcohol and a polycarboxylic acid; ring-opened polymers of a cyclic ester (lactone); and ternary reaction products among a polyhydric alcohol, a polycarboxylic acid, and a cyclic ester. The polyhydric alcohol in the polycondensates between a polyhydric alcohol and a polycarboxylic acid can be any of the above-listed polyhydric alcohols. Examples of the polycarboxylic acid are aliphatic dicarboxylic acids such as malonic acid, maleic acid, succinic acid, glutaric acid, adipic acid, suberic acid, azelaic acid, sebacic acid, and dodecanedionoic acid; alicyclic dicarboxylic acids such as 1,4-cyclohexanedicarboxylic acid; and aromatic dicarboxylic acids such as terephthalic acid, isophthalic acid, orthophthalic acid, 2,6-naphthalenedicarboxylic acid, p-phenylenedicarboxylic acid, and trimellitic acid. Examples of the cyclic ester in the ring-opened polymers of a cyclic ester are propiolactone, β-methyl-δ-valerolactone, and ε-caprolactone. The polyhydric alcohol, the polycarboxylic acid, and the cyclic ester in the ternary reaction products can be those listed above.

The polycarbonate polyols include, for example, reaction products between a polyhydric alcohol and phosgene; ring-opened polymers of a cyclic carbonic acid ester such as an alkylene carbonate. More specifically, the polyhydric alcohol in the reaction products between a polyhydric alcohol and phosgene can be any of the above-listed polyhydric alcohols. Examples of the alkylene carbonate in the ring-opened polymers of a cyclic carbonic acid ester are ethylene carbonate, trimethylene carbonate, tetramethylene carbonate, and hexamethylene carbonate. The polycarbonate polyols have only to be a compound having a carbonate bond in the molecule and having terminal hydroxyl groups and may have an ester bond in addition to the carbonate bond.

The polyolefin polyols are polyols each being a homopolymer or copolymer, having an olefin as a component of the skeleton or principal chain thereof and having at least two hydroxyl groups in the molecule. They preferably have at least two hydroxyl groups at their terminals. The olefin can be an olefin having a terminal carbon-carbon double bond (e.g., an α-olefin such as ethylene or propylene), an olefin having a carbon-carbon double bond at a position other than the terminal (e.g., isobutene), or a diene (e.g., butadiene or isoprene).

The polyacrylic polyols are polyols each being homopolymer or copolymer, having a (meth)acrylate as a component of the skeleton or principal chain thereof and having at least two hydroxyl groups per molecule. Preferred examples of the (meth)acrylate are alkyl esters of (meth) acrylic acid, including C₁₋₂₀ alkyl esters of (meth)acrylic acid, such as methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, decyl (meth)acrylate, dodecyl (meth)acrylate, and octadecyl (meth)acrylate.

In the polyolefin polyols and the polyacrylic polyols, a hydroxyl-containing α,β-unsaturated compound can be used as a copolymerizable component (comonomer) with the olefin or (meth)acrylate for introducing hydroxyl group into the molecule. Examples of the hydroxyl-containing α,β-unsaturated compound are hydroxyalkyl (meth)acrylates such as 2-hydroxyethyl (meth)acrylate and 3-hydroxypropyl (meth)acrylate.

The polyol (A1) can preferably be any of polyether polyols, polyester polyols, and polycarbonate polyols.

### [Anionic group-containing polyol compound (A2)]

The anionic-group-containing polyol compound (A2) (hereinafter referred to as "polyol (A2)") is not specifically limited, as long as it is a compound having at least one anionic group and at least two hydroxyl groups per molecule. The anionic group in the polyol (A2) is preferably carboxyl group and/or sulfo group, of which carboxyl group is optimum. The polyol (A2) can be used alone or in combination.

Examples of the polyol (A2) are carboxyl group-containing polyols corresponding to the polyols listed in the description of the polyol (A1), except with carboxyl group being introduced. The polyol (A2) for use in the present invention is preferably a polyol containing an anionic group and having a low molecular weight, of which a polyhydroxycarboxylic acid represented by following Formula (1) is typically preferred.

(HO)_{X}L(COOH)_{Y} (1)

In Formula (1), L represents a hydrocarbon moiety having one to twelve carbon atoms; X denotes an integer of 2 or more; and Y denotes an integer of 1 or more.

In Formula (1), the hydrocarbon moiety represented by L is preferably an aliphatic hydrocarbon moiety and can be any of straight-chain and branched-chain moieties. X and Y may be the same as or different from each other. The two or more hydroxyl groups may be bound to the same carbon atom or different carbon atoms. When Y is 2 or more, the two or more carboxyl groups may be bound to the same carbon atom or different carbon atoms.

Of these polyhydroxycarboxylic acids, dimethylolalkanoic acids are preferred, of which 2,2-dimethylolalkanoic acids are typically preferred. Examples of the dimethylolalkanoic acids are 2,2-dimethylolpropionic acid, 2,2-dimethylolbutanoic acid, 2,2-dimethylolpentanoic acid, 2,2-dimethylolhexanoic acid, 2,2-dimethylolheptanoic acid, 2,2-dimethyloloctanoic acid, 2,2-dimethylolnonanoic acid, and 2,2-dimethyloldecanoic acid.

### [Compound (A3) containing a tertiary amino group and an isocyanate-reactive group]

The compound (A3) containing a tertiary amino group and an isocyanate-reactive group (hereinafter referred to as "tertiary amino-group-containing, isocyanate-reactive compound (A3)") is not specifically limited, as long as it is a compound having at least one tertiary amino group and at least one isocyanate-reactive group per molecule. Each of these tertiary amino-group-containing, isocyanate-reactive compounds (A3) can be used alone or in combination.

The tertiary amino group (di-substituted amino group) in the tertiary amino-group-containing, isocyanate-reactive compound (A3) can form a tertiary amino group as a result of having one or more substituents. Examples of the substituents are hydrocarbon groups including aryl groups such as phenyl group; alkyl groups such as methyl group, ethyl group, propyl group, and butyl group; and cycloalkyl groups such as cyclohexyl group. The hydrocarbon groups may each have one or more substituents, such as alkoxy groups, aryloxy groups, cycloalkyloxy groups, alkoxycarbonyl groups, aryloxycarbonyl groups, cycloalkyloxycarbonyl groups, and acyl groups.

The tertiary amino-group-containing, isocyanate-reactive compound (A3) may have any number of tertiary amino groups per molecule and may have, for example, one to six, preferably one to three, more preferably one or two, and typically preferably one tertiary amino group. The tertiary amino-group-containing, isocyanate-reactive compound (A3) may have plural tertiary amino groups per molecule but preferably has one tertiary amino group per molecule. Plural tertiary amino groups, if contained in one molecule, may be the same as or different from each other.

The isocyanate-reactive group in the tertiary amino-group-containing, isocyanate-reactive compound (A3) is not specifically limited, as long as it is a group having reactivity with isocyanate group. Examples of the isocyanate-reactive group are hydroxyl group, primary or secondary amino group, and mercapto group. Among them, hydroxyl group and primary or secondary amino group are preferred, of which hydroxyl group is typically preferred. The tertiary amino-group-containing, isocyanate-reactive compound (A3) may have one or more isocyanate-reactive groups per molecule. The tertiary amino-group-containing, isocyanate-reactive compound (A3) may have any number of isocyanate-reactive groups per molecule, as long as it has at least one isocyanate-reactive group, and may have, for example, one to six, and preferably one to three isocyanate-reactive groups. The tertiary amino-group-containing, isocyanate-reactive compound (A3) typically preferably has two isocyanate-reactive groups per molecule. Plural isocyanate-reactive groups, if contained in one molecule, may be the same as or different from each other.

The isocyanate-reactive group of the tertiary amino-group-containing, isocyanate-reactive compound (A3) may be bound directly to the nitrogen atom of the tertiary amino group but is preferably bound thereto with the interposition of a bivalent group. Examples of the bivalent group are bivalent hydrocarbon groups each comprising one or more hydrocarbon groups alone, such as alkylene groups, arylene group, alkylene-arylene groups, and alkylene-arylene-alkylene groups; and a variety of bivalent groups each comprising one or more hydrocarbon groups in combination with one or more other groups (e.g., oxy group or carbonyl-oxy group), such as oxy-alkylene groups, alkylene-oxy-alkylene groups, alkylene-carbonyl-oxy-alkylene groups, alkylene-oxy-carbonyl-alkylene groups, and alkylene-poly(oxyalkylene) groups [poly(alkyleneoxy)-alkylene groups].

In the tertiary amino-group-containing, isocyanate-reactive compound (A3), the tertiary amino group is bound to an organic group. The organic group to which the tertiary amino group is bound is not specifically limited but is preferably a hydrocarbon group. Examples of the hydrocarbon group are aliphatic hydrocarbon groups including alkyl groups such as methyl group, ethyl group, propyl group, isopropyl group, butyl group, pentyl group, and hexyl group; alicyclic hydrocarbon groups including cycloalkyl groups such as cyclohexyl group; and aromatic hydrocarbon groups including aryl groups such as phenyl group. The hydrocarbon group may have one or more substituents. Examples of the substituents are other hydrocarbon groups; isocyanate-reactive groups such as hydroxyl group, primary amino group, secondary amino group, and mercapto group; and isocyanate-nonreactive groups such as tertiary amino groups, alkoxy groups, aryloxy groups, cycloalkyloxy groups, alkoxycarbonyl groups, aryloxycarbonyl groups, cycloalkyloxycarbonyl groups, and acyl groups.

Consequently, a tertiary amine compound containing plural isocyanate-reactive groups can be used as the tertiary amino-group-containing, isocyanate-reactive compound (A3). The tertiary amine compound containing plural isocyanate-reactive groups for use herein is not specifically limited, as long as it is a tertiary amine compound containing a plurality of isocyanate-reactive groups. Examples thereof are a tertiary amine compound having one organic group containing an isocyanate-reactive group (isocyanate-reactive-group-containing organic group) and two organic groups containing hydrocarbon group (hydrocarbon group-containing organic groups) bound to one nitrogen atom [tertiary amine compound (A3-1) containing one isocyanate-reactive-group-containing organic group]; a tertiary amine compound having two isocyanate-reactive-group-containing organic groups and one hydrocarbon group-containing organic group bound to one nitrogen atom [tertiary amine compound (A3-2) containing two isocyanate-reactive-group-containing organic groups]; a tertiary amine compound having three isocyanate-reactive-group-containing organic group bound to one nitrogen atom [tertiary amine compound (A3-3) containing three isocyanate-reactive-group-containing organic groups]; and a tertiary amine compound comprising tertiary amino groups bound to each other directly or with the interposition of a bivalent group, which tertiary amino groups each comprise two isocyanate-reactive-group-containing organic groups bound to one nitrogen atom [tertiary amine compound (A3-4) having two tertiary amino groups each containing two isocyanate-reactive-group-containing organic groups].

More specifically, by taking, as an example, a "tertiary amine compound containing one hydroxyl-group-containing organic group" which has hydroxyl group as the isocyanate-reactive groups, the tertiary amine compound (A3-1) containing one isocyanate-reactive-group-containing organic group includes, but is not limited to, N-(hydroxy-organic group)-N,N-dialkylamines including N-hydroxyalkyl-N,N-dialkylamines such as N-hydroxymethyl-N,N-dimethylamine, N-(2-hydroxyethyl)-N,N-dimethylamine, N-(3-hydroxypropyl)-N,N-dimethylamine, N-(2-hydroxypropyl)-N,N-dimethylamine, N-(4-hydroxybutyl)-N,N-dimethylamine, N-hydroxymethyl-N,N-diethylamine, N-(2-hydroxyethyl)-N,N-diethylamine, N-(3-hydroxypropyl)-N,N-diethylamine, N-(2-hydroxypropyl)-N,N-diethylamine, N-(4-hydroxybutyl)-N,N-diethylamine, N-(2-hydroxyethyl)-N,N-dipropylamine, N-(2-hydroxyethyl)-N,N-diisopropylamine, and N-(2-hydroxyethyl)-N,N-di(n-butyl)amine, and N-[hydroxyalkyl-poly(oxyalkylene)]-N,N-dialkylamines such as N-[hydroxymethyl-poly(oxymethylene)]-N,N-dimethylamine, N-[2-hydroxyethyl-poly(oxyethylene)]-N,N-dimethylamine, N-[3-hydroxypropyl-poly(oxypropylene)]-N,N-dimethylamine, N-[2-hydroxypropyl-poly(oxyisopropylene)]-N,N-dimethylamine, N-[4-hydroxybutyl-poly(oxybutylene)]-N,N-dimethylamine, N-[hydroxymethyl-poly(oxymethylene)]-N,N-diethylamine, N-[2-hydroxyethyl-poly(oxyethylene)]-N,N-diethylamine, N-[3-hydroxypropyl-poly(oxypropylene)]-N,N-diethylamine, N-[2-hydroxypropyl-poly(oxyisopropylene)]-N,N-diethylamine, N-[4-hydroxybutyl-poly(oxybutylene)]-N,N-diethylamine, N-[2-hydroxyethyl-poly(oxyethylene)]-N,N-dipropylamine, N-[2-hydroxyethyl-poly(oxyethylene)]-N,N-diisopropylamine, and N-[2-hydroxyethyl-poly(oxyethylene)]-N,N-di(n-butyl)amine; N,N-bis(hydroxy-organic group)-N,N-diarylamines including N-hydroxyalkyl-N,N-diarylamines such as N-hydroxymethyl-N,N-diphenylamine, N-(2-hydroxyethyl)-N,N-diphenylamine, N-(3-hydroxypropyl)-N,N-diphenylamine, N-(2-hydroxypropyl)-N,N-diphenylamine, and N-(4-hydroxybutyl)-N,N-diphenylamine, and N-[hydroxyalkyl-poly(oxyalkylene)]-N,N-diarylamines such as N-[hydroxymethyl-poly(oxymethylene)]-N,N-diphenylamine, N-[2-hydroxyethyl-poly(oxyethylene)]-N,N-diphenylamine, N-[3-hydroxypropyl-poly(oxypropylene)]-N,N-diphenylamine, N-[2-hydroxypropyl-poly(oxyisopropylene)]-N,N-diphenylamine, and N-[4-hydroxybutyl-poly(oxybutylene)]-N,N-diphenylamine; and N-(hydroxy-organic group)-N,N-dicycloalkylamines corresponding to these compounds.

In the case of a "tertiary amine compound containing one primary- or secondary-amino-group-containing organic group" which has an amino group (primary amino group and/or secondary amino group) as the isocyanate-reactive group, examples of the tertiary amine compound (A3-1) containing one isocyanate-reactive-group-containing organic group are tertiary amine compounds corresponding to those listed as the "tertiary amine compound containing one hydroxyl-group-containing organic group".

By taking, as an example, a "tertiary amine compound containing two hydroxyl-group-containing organic groups" which has hydroxyl group as the isocyanate-reactive group, the tertiary amine compound (A3-2) containing two isocyanate-reactive-group-containing organic groups includes N,N-bis(hydroxy-organic group)-N-alkylamines including N,N-bis(hydroxyalkyl)-N-alkylamines such as N,N-bis(hydroxymethyl)-N-methylamine, N,N-bis(2-hydroxyethyl)-N-methylamine, N,N-bis(3-hydroxypropyl)-N-methylamine, N,N-bis(2-hydroxypropyl)-N-methylamine, N,N-bis(4-hydroxybutyl)-N-methylamine, N,N-bis(hydroxymethyl)-N-ethylamine, N,N-bis(2-hydroxyethyl)-N-ethylamine, N,N-bis(3-hydroxypropyl)-N-ethylamine, N,N-bis(2-hydroxypropyl)-N-ethylamine, N,N-bis(4-hydroxybutyl)-N-ethylamine, N,N-bis(2-hydroxyethyl)-N-propylamine, N,N-bis(2-hydroxyethyl)-N-isopropylamine, and N,N-bis(2-hydroxyethyl)-N-n-butylamine, and N,N-bis[hydroxyalkyl-poly(oxyalkylene)]-N-alkylamines such as N,N-bis[hydroxymethyl-poly(oxymethylene)]-N-methylamine, N,N-bis[2-hydroxyethyl-poly(oxyethylene)]-N-methylamine, N,N-bis[3-hydroxypropyl-poly(oxypropylene)]-N-methylamine, N,N-bis[2-hydroxypropyl-poly(oxyisopropylene)]-N-methylamine, N,N-bis[4-hydroxybutyl-poly(oxybutylene)]-N-methylamine, N,N-bis[hydroxymethyl-poly(oxymethylene)]-N-ethylamine, N,N-bis[2-hydroxyethyl-poly(oxyethylene)]-N-ethylamine, N,N-bis[3-hydroxypropyl-poly(oxypropylene)]-N-ethylamine, N,N-bis[2-hydroxypropyl-poly(oxyisopropylene)]-N-ethylamine, N,N-bis[4-hydroxybutyl-poly(oxybutylene)]-N-ethylamine, N,N-bis[2-hydroxyethyl-poly(oxyethylene)]-N-propylamine, N,N-bis[2-hydroxyethyl-poly(oxyethylene)]-N-isopropylamine, and N,N-bis[2-hydroxyethyl-poly(oxyethylene)]-N-n-butylamine; N,N-bis(hydroxy-organic group)-N-arylamines including N,N-bis(hydroxyalkyl)-N-arylamines such as N,N-bis(hydroxymethyl)-N-phenylamine, N,N-bis(2-hydroxyethyl)-N-phenylamine, N,N-bis(3-hydroxypropyl)-N-phenylamine, N,N-bis(2-hydroxypropyl)-N-phenylamine, and N,N-bis(4-hydroxybutyl)-N-phenylamine, and N,N-bis[hydroxyalkyl-poly(oxyalkylene)]-N-arylamines such as N,N-bis[hydroxymethyl-poly(oxymethylene)]-N-phenylamine, N,N-bis[2-hydroxyethyl-poly(oxyethylene)]-N-phenylamine, N,N-bis[3-hydroxypropyl-poly(oxypropylene)]-N-phenylamine, N,N-bis[2-hydroxypropyl-poly(oxyisopropylene)]-N-phenylamine, and N,N-bis[4-hydroxybutyl-poly(oxybutylene)]-N-phenylamine; and N,N-bis(hydroxy-organic group)-N-cycloalkylamines corresponding to these compounds.

In the case of a "tertiary amine compound containing two primary- or secondary-amino-group-containing organic groups" which has amino groups (primary amino group and/or secondary amino group) as the isocyanate-reactive group, the tertiary amine compound (A3-2) containing two isocyanate-reactive-group-containing organic groups includes tertiary amine compounds corresponding to the above-listed compounds as the "tertiary amine compound containing two hydroxyl-group-containing organic groups".

By taking, as an example, a "tertiary amine compound containing three hydroxyl-group-containing organic groups" which has hydroxyl groups as the isocyanate-reactive groups, examples of the tertiary amine compound (A3-3) containing three isocyanate-reactive-group-containing organic groups are N,N,N-tris(hydroxy-organic group)amines including N,N,N-tris(hydroxyalkyl)amines such as N,N,N-tris(hydroxymethyl)amine, N,N,N-tris(2-hydroxyethyl)amine, N,N,N-tris(3-hydroxypropyl)amine, N,N,N-tris(2-hydroxypropyl)amine, and N,N,N-tris(4-hydroxybutyl)amine; and N,N,N-tris[hydroxyalkyl-poly(oxyalkylene)]amines such as N,N,N-tris[hydroxymethyl-poly(oxymethylene)]amine, N,N,N-tris[2-hydroxyethyl-poly(oxyethylene)]amine, N,N,N-tris[3-hydroxypropyl-poly(oxypropylene)]amine, N,N,N-tris[2-hydroxypropyl-poly(oxyisopropylene)]amine, and N,N,N-tris[4-hydroxybutyl-poly(oxybutylene)]amine.

In the case of a "tertiary amine compound containing three primary- or secondary-amino-group-containing organic groups" which has amino groups (primary amino group and/or secondary amino group) as the isocyanate-reactive groups, examples of the tertiary amine compound (A3-3) containing three isocyanate-reactive-group-containing organic groups are tertiary amine compounds corresponding to the compounds listed as the "tertiary amine compound containing three hydroxyl-group-containing organic groups".

By taking, as an example, a "tertiary amine compound having two tertiary amino groups each containing two hydroxyl-group-containing organic groups" which has hydroxyl groups as the isocyanate-reactive groups, examples of the tertiary amine compound (A3-4) having two tertiary amino groups each containing two isocyanate-reactive-group-containing organic groups are N,N,N',N'-tetra(hydroxy-organic group)alkylenediamines including N,N,N',N'-tetra(hydroxy-alkyl)alkylenediamines such as N,N,N',N'-tetra(hydroxymethyl)ethylenediamine, N,N,N',N'-tetra(2-hydroxyethyl)ethylenediamine, N,N,N',N'-tetra(3-hydroxypropyl)ethylenediamine, N,N,N',N'-tetra(2-hydroxypropyl)ethylenediamine, and N,N,N',N'-tetra(4-hydroxybutyl)ethylenediamine.

In the case of a "tertiary amine compound having two tertiary amino groups each containing two primary- or secondary-amino-group-containing organic groups" which has amino groups (primary amino group and/or secondary amino group) as the isocyanate-reactive groups, examples of the tertiary amine compound (A3-4) having two tertiary amino groups each containing two isocyanate-reactive-group-containing organic groups are tertiary amine compounds corresponding to the compounds listed as the "tertiary amine compound having two tertiary amino groups each containing two hydroxyl-group-containing organic groups".

### [Polyisocyanate compound (A4)]

The polyisocyanate compound (A4) (hereinafter referred to as "polyisocyanate (A4)") is not specifically limited, as long as it is a compound having at least two isocyanate groups per molecule. Examples of the polyisocyanate (A4) are aliphatic polyisocyanates, alicyclic polyisocyanates, aromatic polyisocyanates, and aromatic-aliphatic polyisocyanates. Each of these polyisocyanates (A4) can be used alone or in combination.

Examples of the aliphatic polyisocyanates are aliphatic diisocyanates such as 1,3-trimethylene diisocyanate, 1,4-tetramethylene diisocyanate, 1,3-pentamethylene diisocyanate, 1,5-pentamethylene diisocyanate, 1,6-hexamethylene diisocyanate, 1,2-propylene diisocyanate, 1,2-butylene diisocyanate, 2,3-butylene diisocyanate, 1,3-butylene diisocyanate, 2-methyl-1,5-pentamethylene diisocyanate, 3-methyl-1,5-pentamethylene diisocyanate, 2,4,4-trimethyl-1,6-hexamethylene diisocyanate, 2,2,4-trimethyl-1,6-hexamethylene diisocyanate, 2,6-diisocyanatomethyl caproate, and lysine diisocyanate.

The alicyclic polyisocyanates include alicyclic diisocyanates such as 1,3-cyclopentane diisocyanate, 1,4-cyclohexane diisocyanate, 1,3-cyclohexane diisocyanate, 3-isocyanatomethyl-3,5,5-trimethylcyclohexyl isocyanate, 4,4'-methylenebis(cyclohexyl isocyanate), methyl-2,4-cyclohexane diisocyanatomethyl-2,6-cyclohexane diisocyanate, 1,3-bis(isocyanatomethyl)cyclohexane, 1,4-bis(isocyanatomethyl)cyclohexane, isophorone diisocyanate, and norbornane diisocyanate.

Examples of the aromatic polyisocyanates are aromatic diisocyanates such as m-phenylene diisocyanate, p-phenylene diisocyanate, 2,4-tolylene diisocyanate, 2,6-tolylene diisocyanate, naphthylene-1,4-diisocyanate, naphthylene-1,5-diisocyanate, 4,4'-diphenyl diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, and 3,3'-dimethoxydiphenyl-4,4'-diisocyanate.

The aromatic-aliphatic polyisocyanates include aromatic-aliphatic diisocyanates such as 1,3-xylylene diisocyanate, 1,4-xylylene diisocyanate, ω,ω'-diisocyanate-1,4-diethylbenzene, 1,3-bis(1-isocyanate-1-methylethyl)benzene, 1,4-bis(1-isocyanate-1-methylethyl)benzene, and 1,3-bis(α,α-dimethyl isocyanatomethyl)benzene.

Preferred examples of the polyisocyanate (A4) for use herein are 1,6-hexamethylene diisocyanate, 4,4'-methylenebis(cyclohexyl isocyanate), 1,3-bis(isocyanatomethyl)cyclohexane, 1,4-bis(isocyanatomethyl)cyclohexane, isophorone diisocyanate, 2,4-tolylene diisocyanate, 2,6-tolylene diisocyanate, 4,4'-diphenylmethane diisocyanate, 1,3-xylylene diisocyanate, 1,4-xylylene diisocyanate, norbornane diisocyanate, and 1,3-bis(α,α-dimethyl isocyanatomethyl)benzene. Resins with less discoloration can be prepared by using an aliphatic polyisocyanate, alicyclic polyisocyanate, and/or aromatic-aliphatic polyisocyanate as the polyisocyanate (A4).

The polyisocyanate (A4) for use in the present invention also includes dimers, trimers, reaction products, or polymers of the above-exemplified aliphatic polyisocyanates, alicyclic polyisocyanates, aromatic polyisocyanates, and aromatic-aliphatic polyisocyanates, such as dimer and trimer of diphenylmethane diisocyanate, reaction products between trimethylolpropane and tolylene diisocyanate, reaction products between trimethylolpropane and hexamethylene diisocyanate, as well as polymethylene poly(phenyl isocyanate)s, polyether polyisocyanates, and polyester polyisocyanates.

One or more diisothiocyanate compounds such as phenyl diisothiocyanate can be used in combination with the polyisocyanate (A4) in the present invention.

### [Isocyanate-reactive-group-containing alkoxysilane compound (A5)]

The alkoxysilane compound (A5) containing one or more isocyanate-reactive groups (hereinafter referred to as "isocyanate-reactive-group-containing alkoxysilane (A5)") is not specifically limited, as long as it is a silane compound having at least one isocyanate-reactive group and at least one alkoxy group per molecule. Each of these isocyanate-reactive-group-containing alkoxysilanes (A5) can be used alone or in combination.

The isocyanate-reactive group is not specifically limited, as long as it is a group having reactivity with isocyanate group and includes, for example, primary amino group, secondary amino group, mercapto group, isocyanate group, and hydroxyl group, of which primary or secondary amino group and mercapto group are preferred. Plural isocyanate-reactive groups, if contained in the compound, may be the same as or different from each other.

The isocyanate-reactive-group-containing alkoxysilane (A5) for use in the present invention is preferably a primary- or secondary-amino-group-containing alkoxysilane compound (A5-1) and/or a mercapto-group-containing alkoxysilane compound (A5-2).

The primary- or secondary-amino-group-containing alkoxysilane compound (A5-1) (hereinafter referred to as "amino-group-containing alkoxysilane (A5-1)") is not specifically limited, as long as it is a silane compound having at least one primary or secondary amino group and at least one alkoxy group per molecule. The amino-group-containing alkoxysilane (A5-1) may have one or more tertiary amino groups as the amino group. The mercapto group-containing alkoxysilane compound (A5-2) (hereinafter referred to as "mercapto group-containing alkoxysilane (A5-2)") is not specifically limited, as long as it is a silane compound having at least one mercapto group and at least one alkoxy group per molecule.

Preferred examples of the alkoxy group in the isocyanate-reactive-group-containing alkoxysilane (A5) are C₁₋₄alkoxy groups such as methoxy group, ethoxy group, propoxy group, isopropoxy group, butoxy group, isobutyloxy group, s-butyloxy group, and t-butyloxy group. More preferred alkoxy groups are methoxy group, ethoxy group, and propoxy group, of which methoxy group and ethoxy group are typically preferred. Such alkoxy groups are generally bound to the silicon atom of the isocyanate-reactive-group-containing alkoxysilane (A5). The alkoxysilane generally has one to three alkoxy groups, and preferably two or three alkoxy groups. Plural alkoxy groups, if contained in the compound, may be the same as or different from each other. Specifically, identical alkoxy groups or two or more different alkoxy groups may be bound to the silicon atom of the isocyanate-reactive-group-containing alkoxysilane (A5).

When the isocyanate-reactive group is an amino group, the amino group can form a secondary amino group or a tertiary amino group by having one or more substituents. Examples of the substituents are hydrocarbon groups including aryl groups such as phenyl group; alkyl groups such as methyl group, ethyl group, propyl group, and butyl group; and cycloalkyl group such as cyclohexyl group. The hydrocarbon groups may each have one or more other substituents such as alkoxy groups, aryloxy groups, cycloalkyloxy groups, alkoxycarbonyl groups, aryloxycarbonyl groups, cycloalkyloxycarbonyl groups, and acyl groups.

The isocyanate-reactive group (e.g., primary amino group, secondary amino group, and/or mercapto group) may be bound directly to the silicon atom but is preferably bound thereto with the interposition of a bivalent group. Examples of the bivalent group herein are bivalent hydrocarbon groups each comprising one or more hydrocarbon groups alone, such as alkylene groups, arylene group, alkylene-arylene groups, and alkylene-arylene-alkylene groups; and a variety of bivalent groups each comprising one or more hydrocarbon groups and one or more other groups (e.g., oxy group and carbonyl-oxy group), such as alkylene-oxy-alkylene groups, alkylene-carbonyl-oxy-alkylene groups, alkylene-oxy-carbonyl-alkylene groups, and alkylene-poly(oxyalkylene) groups.

When the isocyanate-reactive-group-containing alkoxysilane (A5) is, for example, an amino-group-containing alkoxysilane (A5-1), the amino group may be contained in the form of an aminoalkyl group. Examples of the aminoalkyl group are amino-C₁₋₃ alkyl groups such as aminomethyl group, 1-aminoethyl group, 2-aminoethyl group, 1-aminopropyl group, 2-aminopropyl group, and 3-aminopropyl group; corresponding secondary amino groups such as amino-C₁₋₃ alkyl groups each having one hydrocarbon group as a substituent or corresponding tertiary amino groups such as amino-C₁₋₃ alkyl groups each having two hydrocarbon groups as substituents. The one or more substituents, such as hydrocarbon groups, substituted on the nitrogen atom in the secondary amino group or tertiary amino group may further have amino group. Specifically, for example, it may be in the form of an N-aminoalkyl-aminoalkyl group, or N-[N-(aminoalkyl)aminoalkyl]aminoalkyl group. The compound may have a secondary amino group in combination with a primary amino group. The compound may have any number of such primary and/or secondary amino groups but may generally have one or two primary and/or secondary amino groups.

More specifically, the amino-group-containing alkoxysilane (A5-1), for example, as the isocyanate-reactive-group-containing alkoxysilane (A5) is preferably an amino-group-containing alkoxysilane represented by following Formula (2a) which has a primary amino group alone as the isocyanate-reactive group; an amino-group-containing alkoxysilane represented by following Formula (2b) which has a primary amino group and a secondary amino group as the isocyanate-reactive groups; or an amino-group-containing alkoxysilane represented by following Formula (2c) which has a secondary amino group alone as the isocyanate-reactive group. In the case of the mercapto group-containing alkoxysilane (A5-2), it is preferably a mercapto group-containing alkoxysilane represented by following Formula (2d) which has mercapto group alone as the isocyanate-reactive group.

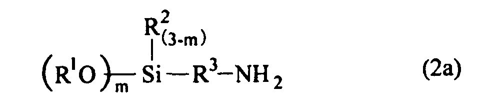

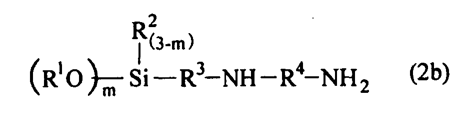

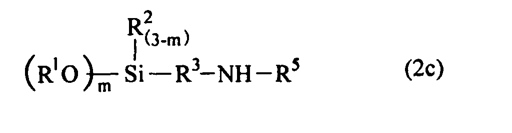

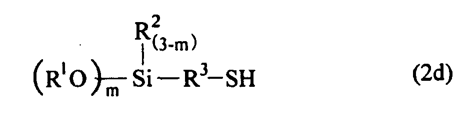

In Formulae (2a) to (2d), R¹ and R² may be the same as or different from each other and each represents an alkyl group; each of R³ and R⁴ represents an alkylene group; R⁵ represents an aryl group, an alkyl group or a cycloalkyl group; and m is an integer of 1 to 3, wherein the alkylene groups represented by R³ and R⁴ in Formula (2b) may be the same as or different from each other.

In Formulae (2a) to (2d), preferred examples of the alkyl group as R¹ are alkyl groups each having about one to about four carbon atoms, such as methyl group, ethyl group, propyl group, isopropyl group, butyl group, isobutyl group, and t-butyl group. Examples of the alkyl group as R² are the same alkyl groups listed as R¹, of which methyl group or ethyl group is preferred. The alkylene group as R³ is preferably an alkylene group having about one to about three carbon atoms, such as methylene group, ethylene group, or trimethylene group. The alkylene group as R⁴ can be an alkylene group having about one to about three carbon atoms, as the alkylene group as R³. As R⁵, the aryl group is preferably phenyl group, and the alkyl group is preferably an alkyl group having about one to about four carbon atoms, such as methyl group, ethyl group, propyl group, isopropyl group, butyl group, isobutyl group, or t-butyl group. The cycloalkyl group for use herein is preferably cyclohexyl group. The repetition number m is an integer of 1 to 3.

Furthermore specifically, examples of the amino-group-containing alkoxysilane represented by Formula (2a) which has a primary amino group as the isocyanate-reactive group are aminoalkyltrialkoxysilanes such as aminomethyltrimethoxysilane, aminomethyltriethoxysilane, β-aminoethyltrimethoxysilane, β-aminoethyltriethoxysilane, γ-aminopropyltrimethoxysilane, γ-aminopropyltriethoxysilane, γ-aminopropyltripropoxysilane, γ-aminopropyltriisopropoxysilane, and γ-aminopropyltributoxysilane; (aminoalkyl)alkyldialkoxysilanes such as β-aminoethylmethyldimethoxysilane, β-aminoethylmethyldiethoxysilane, γ-aminopropylmethyldimethoxysilane, γ-aminopropylmethyldiethoxysilane, and γ-aminopropylmethyldipropoxysilane, and corresponding aminoalkyldialkyl-(mono)alkoxysilanes.

Examples of the amino-group-containing alkoxysilane represented by Formula (2b) which has a primary amino group and a secondary amino group as the isocyanate-reactive groups are N-(aminoalkyl)aminoalkyltrialkoxysilanes such as N-β-(aminoethyl)-γ-aminopropyltrimethoxysilane, and N-β-(aminoethyl)-γ-aminopropyltriethoxysilane; and N-(aminoalkyl)aminoalkylalkyldialkoxysilanes such as N-β-(aminoethyl)-γ-aminopropylmethyldimethoxysilane, and N-β-(aminoethyl)-γ-aminopropylmethyldiethoxysilane.

Examples of the amino-group-containing alkoxysilane represented by Formula (2c) which has a secondary amino group alone as the isocyanate-reactive group are N-phenyl-β-aminoethyltrialkoxysilanes such as N-phenyl-β-aminoethyltrimethoxysilane, and N-phenyl-β-aminoethyltriethoxysilane; N-phenyl-γ-aminopropyltrialkoxysilanes such as N-phenyl-γ-aminopropyltrimethoxysilane, N-phenyl-γ-aminopropyltriethoxysilane, N-phenyl-γ-aminopropyltripropoxysilane, and N-phenyl-γ-aminopropyltributoxysilane, as well as corresponding N-phenylaminoalkyl-(mono- or di-)alkyl-(di- or mono- )alkoxysilanes. The examples also include N-alkylaminoalkyltrialkoxysilanes corresponding to the above-mentioned amino-group-containing alkoxysilanes containing a secondary amino group having phenyl group as a substituent, such as N-methyl-3-aminopropyltrimethoxysilane, N-ethyl-3-aminopropyltrimethoxysilane, N-n-propyl-3-aminopropyltrimethoxysilane, N-n-butyl-aminomethyltrimethoxysilane, N-n-butyl-2-aminoethyltrimethoxysilane, N-n-butyl-3-aminopropyltrimethoxysilane, N-n-butyl-3-aminopropyltriethoxysilane, and N-n-butyl-3-aminopropyltripropoxysilane; and N-alkylaminoalkyl(mono- or di-)alkyl-(di- or mono-)alkoxysilanes.

The amino-group-containing alkoxysilane (A5-1) for use in the present invention are available under the trade names of "KBM 6063", "X-12-896", "KBM 576", "X-12-565", "X-12-580", "X-12-5263", "X-12-666", "KBM 6123", "X-12-575", "X-12-577", "X-12-563B", "X-12-730", "X-12-562", "X-12-5202", "X-12-5204", or "KBE 9703" from Shin-Etsu Chemical Co., Ltd. Consequently, the amino-group-containing alkoxysilane (A5-1) also includes N-(5-aminopentyl)-γ-aminopropyltrimethoxysilane, N-β-[N-β-(aminoethyl)aminoethyl]-γ-aminopropyltrimethoxysilane, 1,2-bis(y-trimethoxysilyl-propylamino)ethane, bis(y-trimethoxysilyl-propyl)amine, N-β-(aminoethyl)-β-(4-aminomethylphenyl)ethyltrimethoxysilane, and alkoxysilane compounds corresponding to these compounds, except for having a different number of carbon atoms in a hydrocarbon group such as an alkyl group or an alkylene group; alkoxysilane compounds each having one or more other groups (e.g., styrenically unsaturated group, olefinically unsaturated group, and/or carboxyl group) in addition to one or more primary or secondary amino groups; alkoxysilane compounds each having one or more primary or secondary amino groups and being in the form of a salt such as a hydrochloride; and alkoxysilane compounds having one or more primary or secondary amino groups and plural alkoxysilyl groups.

Examples of the alkoxysilane represented by Formula (2d)which has mercapto group as the isocyanate-reactive group are mercaptoalkyltrialkoxysilanes such as mercaptomethyltrimethoxysilane, mercaptomethyltriethoxysilane, β-mercaptoethyltrimethoxysilane, β-mercaptoethyltriethoxysilane, γ-mercaptopropyltrimethoxysilane, γ-mercaptopropyltriethoxysilane, γ-mercaptopropyltripropoxysilane, γ-mercaptopropyltriisopropoxysilane, and γ-mercaptopropyltributoxy silane; (mercaptoalkyl)alkyldialkoxysilanes such as β-mercaptoethylmethyldimethoxysilane, β-mercaptoethylmethyldiethoxysilane, γ-mercaptopropylmethyldimethoxysilane, γ-mercaptopropylmethyldiethoxysilane, and γ-mercaptopropylmethyldipropoxysilane; and mercaptoalkyldialkyl(mono)alkoxysilanes corresponding to these compounds.

The amino-group-containing alkoxysilane (A5-1) is featured by high reactivity and high commercial availability and is preferably used as the isocyanate-reactive-group-containing alkoxysilane (A5) in the present invention. Of the amino-group-containing alkoxysilanes (A5-1), preferred examples of the amino-group-containing alkoxysilane having at least a primary amino group as the isocyanate-reactive group are N-β-(aminoethyl)-γ-aminopropyltrimethoxysilane, N-β-(aminoethyl)-γ-aminopropyltriethoxysilane, N-β-(aminoethyl)-γ-aminopropylmethyldimethoxysilane, and γ-aminopropyltrimethoxysilane. Preferred examples of the amino-group-containing alkoxysilane having a secondary amino group alone as the isocyanate-reactive group are N-phenyl-γ-aminopropyltrimethoxysilane and N-n-butyl-3-aminopropyltrimethoxysilane.

The amino-group-containing alkoxysilane (A5-1) can also be an alkoxysilane compound containing at least a secondary amino group as the isocyanate-reactive group (hereinafter referred to as "ester-modified amino-group-containing alkoxysilane (A5-4)"), as a reaction product between an unsaturated carboxylic acid ester (A5-3) and an alkoxysilane compound containing at least a primary amino group (preferably containing both a primary amino group and a secondary amino group) as the isocyanate-reactive group (hereinafter referred to as "primary amino-group-containing alkoxysilane") as described above. The ester-modified amino-group-containing alkoxysilane (A5-4) is preferably a secondary-amino-group-containing alkoxysilane compound as a reaction product between an unsaturated carboxylic acid ester (A5-3) and an alkoxysilane compound containing at least a primary amino group. It is typically preferably a secondary-amino-group-containing alkoxysilane compound as a reaction product between an unsaturated carboxylic acid ester (A5-3) and an alkoxysilane compound containing a primary amino group and a secondary amino group.

The unsaturated carboxylic acid ester (A5-3) for use for the ester-modified amino-group-containing alkoxysilane (A5-4) is not specifically limited, as long as it is a compound corresponding to an unsaturated carboxylic acid, except with at least one esterified carboxylic acid group (carboxyl group). The unsaturated carboxylic acid ester (A5-3) can be an unsaturated monocarboxylic acid ester or an unsaturated polycarboxylic acid ester such as an unsaturated dicarboxylic acid ester. Each of these unsaturated carboxylic acid esters (A5-3) can be used alone or in combination.

The unsaturated carboxylic acid ester (A5-3) is preferably a compound having carboxyl group or an ester thereof (e.g., alkoxycarbonyl group, cycloalkyloxycarbonyl group, or aryloxycarbonyl group) directly bound to a carbon atom constituting a carbon-carbon double bond. Examples of such compounds are unsaturated monocarboxylic acid esters such as acrylic esters, methacrylic esters, crotonic esters, isocrotonic esters, 2-butenoic esters, 3-methyl-2-butenoic esters, 2-pentenoic esters, 2-octenoic esters, and cinnamic esters; and unsaturated dicarboxylic acid esters such as maleic esters (mono- or di-esters), fumaric esters (mono- or di-esters), and itaconic esters (mono- or di-esters).

Examples of the ester moiety in the unsaturated carboxylic acid ester (A5-3) are esters with aliphatic hydrocarbons (e.g., alkyl esters) such as methyl ester, ethyl ester, propyl ester, isopropyl ester, butyl ester, isobutyl ester, s-butyl ester, t-butyl ester, pentyl ester, isopentyl ester, hexyl ester, heptyl ester, octyl ester, 2-ethylhexyl ester, nonyl ester, decyl ester, isodecyl ester, undecyl ester, dodecyl ester, tridecyl ester, tetradecyl ester, hexadecyl ester, and octadecyl ester; esters with alicyclic hydrocarbons (e.g., cycloalkyl esters) such as cyclohexyl ester, isobornyl ester, bornyl ester, dicyclopentadienyl ester, dicyclopentyl ester, dicyclopentenyl ester, and tricyclodecyl ester; and esters with aromatic hydrocarbons (e.g., aryl esters) such as phenyl ester and benzyl ester. Plural ester moieties, if contained in the compound, may be the same as or different from each other.

Of the above-listed unsaturated carboxylic acid esters, the unsaturated carboxylic acid ester (A5-3) is preferably any of acrylic esters, methacrylic esters (hereinafter these are generically referred to as "(meth)acrylic esters"), and maleic diesters. More specific examples of the (meth)acrylic esters are (meth)acrylic acid alkyl esters such as methyl (meth)acrylate, ethyl (meth)acrylate, butyl (meth)acrylate, hexyl (meth)acrylate, octyl (meth)acrylate, 2-ethylhexyl (meth)acrylate, dodecyl (meth)acrylate, and octadecyl (meth)acrylate. The maleic diesters include maleic acid dialkyl esters such as dimethyl maleate, diethyl maleate, dibutyl maleate, dihexyl maleate, dioctyl maleate, di(2-ethylhexyl) maleate, didodecyl maleate, and dioctadecyl maleate.

More specific examples of the alkoxysilane compound containing at least a secondary amino group as the isocyanate-reactive group, as a reaction product between an unsaturated carboxylic acid ester (A5-3) and a primary amino-group-containing alkoxysilane [ester-modified amino-group-containing alkoxysilane (A5-4)], are compounds in which a carbon atom at the β-position in a carbon-carbon double bond of the unsaturated carboxylic acid ester (A5-3) is at least bound to the nitrogen atom of the amino group in the primary amino-group-containing alkoxysilane. In other words, the ester-modified amino-group-containing alkoxysilane (A5-4) is a compound formed as a result of a Michael addition reaction of the nitrogen atom of the amino group in the primary amino-group-containing alkoxysilane to the unsaturated bond (carbon-carbon double bond) of the unsaturated carboxylic acid ester (A5-3). The reaction can be carried out in the presence of, or in the absence of, a solvent. Heat and/or pressure may be applied during the reaction.

For example, when the primary amino-group-containing alkoxysilane is the alkoxysilane compound represented by mentioned-mentioned Formula (2a) which has a primary amino group alone as the isocyanate-reactive group, and the unsaturated carboxylic acid ester (A5-3) is an unsaturated carboxylic acid ester represented by following Formula (3): 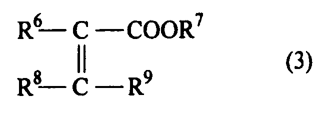 wherein R⁶ and R⁸ may be the same as or different from each other and are each hydrogen atom or an alkyl group; and R⁷ represents an alkyl group, an aryl group, or a cycloalkyl group; and R⁹ represents hydrogen atom, an alkyl group, an aryl group, an alkoxycarbonyl group, an aryloxycarbonyl group, or a cycloalkyloxycarbonyl group, the ester-modified amino-group-containing alkoxysilane (A5-4) can be represented by following Formula (4): 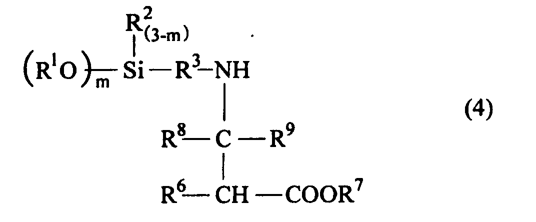 wherein R¹ to R³, R⁶ to R⁹ and m are as defined above.

When the primary amino-group-containing alkoxysilane is the alkoxysilane compound represented by Formula (2b) which has a primary amino group and a secondary amino group as the isocyanate-reactive groups, and the unsaturated carboxylic acid ester (A5-3) is the unsaturated carboxylic acid ester represented by Formula (3), the ester-modified amino-group-containing alkoxysilane (A5-4) can be represented by following Formula (5a) or (5b) : 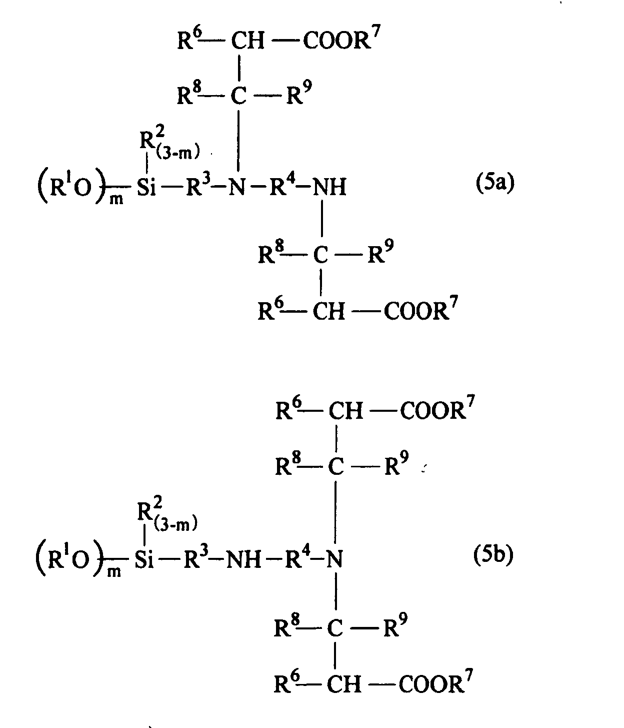 wherein R¹ to R⁴, R⁶ to R⁹ and m are as defined above.

In Formulae (3), (4), (5a), and (5b), R¹ to R⁹ and m are as defined above. Specifically, the alkyl group as R¹ is preferably, for example, an alkyl group having about one to about four carbon atoms, such as methyl group, ethyl group, propyl group, isopropyl group, butyl group, isobutyl group, or t-butyl group. The alkyl group as R² can be any of the alkyl groups listed as R¹, of which methyl group or ethyl group is preferred. The alkylene group as R³ is preferably an alkylene group having about one to about three carbon atoms, such as methylene group, ethylene group, or trimethylene group. The alkylene group as R⁴ can be an alkylene group having about one to about three carbon atoms, as the alkylene group as R³ The repetition number m is an integer of 1 to 3.

The alkyl group as R⁶ can be, for example, an alkyl group having about one to about two carbon atoms, such as methyl group or ethyl group. Examples of the alkyl group as R⁷ are alkyl groups each having about one to about twenty carbon atoms, such as methyl group, ethyl group, propyl group, butyl group, isobutyl group, t-butyl group, hexyl group, octyl group, and 2-ethylhexyl group. As R⁷, the aryl group can be phenyl group, and the cycloalkyl group can for example be cyclohexyl group. The alkyl group as R⁸ can be, for example, an alkyl group having about one to about six carbon atoms, such as methyl group, ethyl group, propyl group, butyl group, isobutyl group, t-butyl group, or hexyl group. The alkyl group as R⁹ can be, for example, an alkyl group having about one to about two carbon atoms, such as methyl group or ethyl group. The aryl group as R⁹ can be phenyl group. The alkyl group moiety, the aryl group moiety, and the cycloalkyl group moiety of the alkoxycarbonyl group, the aryloxycarbonyl group, and the cycloalkyloxycarbonyl group as R⁹ can preferably be any of the alkyl groups, the aryl groups, and the cycloalkyl groups, respectively, exemplified as R⁷.

The amino-group-containing alkoxysilane (A5) for use in the present invention is preferably an alkoxysilane compound containing at least a secondary amino group, of which the ester-modified alkoxysilane (A5-4) represented by Formula (4), Formula (5a) or Formula (5b) is typically preferred.

### [Amine-based chain extender (A6)]

The amine-based chain extender (A6) can be an amine compound having, per molecule, one amino group (e.g., primary amino group or secondary amino group) other than tertiary amino group but is preferably a polyamine having, per molecule, plural amino groups other than tertiary amino group. The polyamine may have any number of amino groups (functional amino groups) other than tertiary amino group in the molecule, as long as it has at least two such functional amino groups, but may have, for example, two to six, preferably two to four, and more preferably two or three amino groups other than tertiary amino group. The amine-based chain extender (A6) includes, for example, aliphatic polyamines, alicyclic polyamines, aromatic polyamines, aromatic-aliphatic polyamines, hydrazine and derivatives thereof. Each of these amine-based chain extenders (A6) can be used alone or in combination.

Specific examples of the aliphatic polyamines as the amine-based chain extender (A6) are aliphatic diamines such as ethylenediamine, 1,3-trimethylenediamine, 1,4-tetramethylenediamine, 1,3-pentamethylenediamine, 1,5-pentamethylenediamine, 1,6-hexamethylenediamine, 1,2-propylenediamine, 1,2-butylenediamine, 2,3-butylenediamine, 1,3-butylenediamine, 2-methyl-1,5-pentamethylenediamine, 3-methyl-1,5-pentamethylenediamine, 2,4,4-trimethyl-1,6-hexamethylenediamine, and 2,2,4-trimethyl-1,6-hexamethylenediamine; as well as diethylenetriamine, triethylenetetramine, tetraethylenepentamine, and pentaethylenehexamine.

Examples of the alicyclic polyamines are alicyclic diamines such as 1,3-cyclopentanediamine, 1,4-cyclohexanediamine, 1,3-cyclohexanediamine, 1-amino-3-aminomethyl-3,5,5-trimethylcyclohexane, 1-amino-1-methyl-4-aminomethylcyclohexane, 1-amino-1-methyl-3-aminomethylcyclohexane, 4,4'-methylenebis(cyclohexylamine), 4,4'-methylenebis(3-methyl-cyclohexylamine), methyl-2,3-cyclohexanediamine, methyl-2,4-cyclohexanediamine, methyl-2,6-cyclohexanediamine, 1,3-bis(aminomethyl)cyclohexane, 1,4-bis(aminomethyl)cyclohexane, isophoronediamine, and norbornanediamine.

The aromatic polyamines include aromatic diamines such as m-phenylenediamine, p-phenylenediamine, 2,4-tolylenediamine, 2,6-tolylenediamine, naphthylene-1,4-diamine, naphthylene-1,5-diamine, 4,4'-diphenyldiamine, 4,4'-diphenylmethanediamine, 2,4'-diphenylmethanediamine, 4,4'-diphenyl ether diamine, 2-nitrodiphenyl-4,4'-diamine, 2,2'-diphenylpropane-4,4'-diamine, 3,3'-dimethyldiphenylmethane-4,4'-diamine, 4,4'-diphenylpropanediamine, and 3,3'-dimethoxydiphenyl-4,4'-diamine.

The aromatic-aliphatic polyamines include aromatic-aliphatic diamines such as 1,3-xylylenediamine, 1,4-xylylenediamine, α,α,α',α'-tetramethyl-1,3-xylylenediamine, α,α,α',α'-tetramethyl-1,4-xylylenediamine, ω,ω'-diamino-1,4-diethylbenzene, 1,3-bis(1-amino-1-methylethyl)benzene, 1,4-bis(1-amino-1-methylethyl)benzene, and 1,3-bis(α,α-dimethylaminomethyl)benzene.

Examples of the hydrazine and derivatives thereof are hydrazine and dihydrazide compounds. The dihydrazide compounds include aliphatic dicarboxylic acid dihydrazides such as carbodihydrazide (carbohydrazide), oxalic dihydrazide, malonic dihydrazide, succinic dihydrazide, glutaric dihydrazide, and adipic dihydrazide; aromatic dicarboxylic acid dihydrazides such as isophthalic dihydrazide, and terephthalic dihydrazide; and alicyclic dicarboxylic acid dihydrazides such as 1,4-cyclohexanedicarboxylic dihydrazide.

The amine-based chain extender (A6) is preferably any of aliphatic, alicyclic and aromatic-aliphatic polyamines such as ethylenediamine, 1,3-pentamethylenediamine, 1,6-hexamethylenediamine, diethylenetriamine, triethylenetetramine, 4,4'-methylenebis(cyclohexylamine), 4,4'-methylenebis(3-methyl-cyclohexylamine), 1,3-bis(aminomethyl)cyclohexane, isophoronediamine, norbornanediamine, and 1,3-xylylenediamine, and hydrazine and derivatives thereof, such as hydrazine and carbodihydrazide.

### [Urethane prepolymer (A) containing an anionic group and a tertiary amino group and having a terminal alkoxysilyl group]

The urethane prepolymer (A) containing an anionic group and a tertiary amino group and having a terminal alkoxysilyl group is, as is described above, a reaction product among a polyol (A1), a polyol (A2), a tertiary amino-group-containing, an isocyanate-reactive compound (A3), a polyisocyanate (A4), an isocyanate-reactive-group-containing alkoxysilane (A5), and an amine-based chain extender (A6). It is a urethane prepolymer which has, in the molecule, an anionic group derived from the polyol (A2), and a tertiary amino group derived from the tertiary amino-group-containing, isocyanate-reactive compound (A3), contains one or more terminal alkoxysilyl groups derived from the isocyanate-reactive-group-containing alkoxysilane (A5) in the principal chain and further has a urea bond moiety formed as a result of the reaction between an isocyanate group derived from the polyisocyanate (A4) and an amino group of the amine-based chain extender (A6). The urethane prepolymer (A) containing an anionic group and a tertiary amino group and having a terminal alkoxysilyl group may further have a side chain [an ester group (a group having an ester bond)] derived from the unsaturated carboxylic acid ester relating to the isocyanate-reactive-group-containing alkoxysilane (A5), according to necessity.

The urethane prepolymer (A) containing an anionic group and a tertiary amino group and having a terminal alkoxysilyl group can be, for example, an alkoxysilylated urethane prepolymer containing an anionic group and a tertiary amino group and being a reaction product prepared by allowing the anionic-group-free polyol compound (A1) to react with the anionic-group-containing polyol compound (A2), the compound (A3) containing a tertiary amino group and an isocyanate-reactive group, and the polyisocyanate compound (A4) to yield a urethane prepolymer containing an anionic group and a tertiary amino group; allowing the resulting urethane prepolymer to react with the alkoxysilane compound (A5) containing an isocyanate-reactive group to partially alkoxysilylate the terminal isocyanate groups of the urethane prepolymer containing an anionic group and a tertiary amino group to thereby yield a urethane prepolymer containing an anionic group and a tertiary amino group and having partially alkoxysilylated terminals; and allowing residual isocyanate groups in the urethane prepolymer containing an anionic group and a tertiary amino group and having partially alkoxysilylated terminals to react with the amino group of the amine-based chain extender (A6) to thereby carrying out chain extension

More specifically, the urethane prepolymer containing an anionic group and a tertiary amino group is a reaction product among the polyol (A1), the polyol (A2), the tertiary amino-group-containing, isocyanate-reactive compound (A3), and the polyisocyanate (A4). The reaction can be carried out according to a known or conventional procedure for preparing a urethane prepolymer as a result of the reaction of a polyol compound and a polyisocyanate compound. The urethane prepolymer containing an anionic group and a tertiary amino group preferably has one or more terminal isocyanate groups.

A polymerization catalyst can be used in mixing or reacting the polyol (A1), the polyol (A2), the tertiary amino-group-containing, isocyanate-reactive compound (A3), and the polyisocyanate (A4) for accelerating the reaction. The material compounds can be mixed or reacted in a solvent.

The reaction between the urethane prepolymer containing an anionic group and a tertiary amino group and the isocyanate-reactive-group-containing alkoxysilane (A5) can be carried out by mixing the two components and, where necessary, heating the mixture. The reaction between the urethane prepolymer containing an anionic group and a tertiary amino group and the isocyanate-reactive-group-containing alkoxysilane (A5) allows the terminal isocyanate group or groups of the urethane prepolymer containing an anionic group and a tertiary amino group to be alkoxysilylated to thereby yield a urethane prepolymer partially having alkoxysilylated terminals and containing one or more anionic groups. The mixing or reaction herein can be carried out in the presence of a polymerization catalyst as is described above and can be conducted in the presence of a solvent.

The polymerization catalyst includes, for example, known or conventional polymerization catalysts (curing catalysts) for use in the reaction between a polyol compound and a polyisocyanate compound. More specific examples of the polymerization catalyst are organotin compounds; metal complexes; basic compounds such as amine compounds; and organophosphate compounds. The organotin compounds include dibutyltin dilaurate, dibutyltin maleate, dibutyltin Phthalate, stannous octoate, dibutyltin methoxide, dibutyltin diacetylacetate, and dibutyltin diversatate. Examples of the metal complexes are titanate compounds such as tetrabutyl titanate, tetraisopropyl titanate, and triethanolamine titanate; metal salts of carboxylic acids, such as lead octoate, lead naphthenate, nickel naphthenate, and cobalt naphthenate; and metal acetylacetonate complexes such as aluminum acetylacetonate complex and vanadium acetylacetonate complex. Examples of the basic compounds such as amine compounds are aminosilanes such as γ-aminopropyltrimethoxysilane and γ-aminopropyltriethoxysilane; quaternary ammonium salts such as tetramethylammonium chloride and benzalkonium chloride; and straight-chain or cyclic tertiary amines or quaternary ammonium salts each containing plural nitrogen atoms, such as products available under the trade names of "DABCO" series and "DABCO BL" series from Sankyo Air Products Co., Ltd., and 1,8-diazabicyclo[5.4.0]undec-7-ene. The organophosphate compounds include monomethyl phosphate, din-butyl phosphate, and triphenyl phosphate.

The reaction between the urethane prepolymer containing an anionic group and a tertiary amino group and having partially alkoxysilylated terminals and the amine-based chain extender (A6) can be carried out by mixing the two components and, where necessary, heating the mixture. This reaction allows residual terminal isocyanate group or groups in the urethane prepolymer containing an anionic group and a tertiary amino group and having partially alkoxysilylated terminals to react with the amino group of the amine-based chain extender (A6). Thus, the urethane prepolymer containing an anionic group and a tertiary amino group and having partially alkoxysilylated terminals undergoes chain extension to thereby yield a urethane prepolymer (A) containing an anionic group and a tertiary amino group and having a terminal alkoxysilyl group as an alkoxysilylated urethane prepolymer containing an anionic group and a tertiary amino group. The mixing or reaction can be carried out in the presence of a polymerization catalyst, as is described above. The polymerization catalyst for use herein can be, for example, any of known or conventional polymerization catalysts (curing catalysts) for use in the reaction between a polyol compound and a polyisocyanate compound.

The mixing or reaction of the urethane prepolymer containing an anionic group and a tertiary amino group and having partially alkoxysilylated terminals and the amine-based chain extender (A6) may be carried out before, during or after dispersing the urethane prepolymer containing an anionic group and a tertiary amino group and having partially alkoxysilylated terminals or a reaction mixture thereof [which may containing a basic compound (B)] in water (C) but is preferably during or after the dispersion. Specifically, it is preferred to add amine-based chain extender (A6) simultaneously with or after dispersing the urethane prepolymer containing an anionic group and a tertiary amino group and having partially alkoxysilylated terminals in water (C), followed by mixing, to thereby allow the urethane prepolymer containing an anionic group and a tertiary amino group and having partially alkoxysilylated terminals to react with the amine-based chain extender (A6).

Thus, the urethane prepolymer (A) containing an anionic group and a tertiary amino group and having a terminal alkoxysilyl group is prepared. The order of mixing of the individual components is not specifically limited. For efficiently preparing the urethane prepolymer (A) containing an anionic group and a tertiary amino group and having a terminal alkoxysilyl group, it is preferred that a polyisocyanate (A4) is initially added to a mixture of a polyol (A1), a polyol (A2) and a tertiary amino-group-containing, isocyanate-reactive compound (A3), and a polymerization catalyst is then added according to necessity, followed by reaction to thereby yield a urethane prepolymer containing an anionic group and a tertiary amino group; an isocyanate-reactive-group-containing alkoxysilane (A5) is added to the reaction mixture, followed by reaction, to thereby yield a urethane prepolymer containing an anionic group and a tertiary amino group and having partially alkoxysilylated terminals; and an amine-based chain extender (A6) and water (C) are added to the reaction mixture, to allow the urethane prepolymer containing an anionic group and a tertiary amino group and having partially alkoxysilylated terminals to undergo chain extension by the action of the amine-based chain extender (A6) while the urethane prepolymer containing an anionic group and a tertiary amino group and having partially alkoxysilylated terminals is dispersed in water, to thereby yield an alkoxysilylated urethane prepolymer containing an anionic group and a tertiary amino group.

The proportions of the polyol (A1), the polyol (A2), the tertiary amino-group-containing, isocyanate-reactive compound (A3), the polyisocyanate (A4), the isocyanate-reactive-group-containing alkoxysilane (A5), and the amine-based chain extender (A6) components in the urethane prepolymer (A) containing an anionic group and a tertiary amino group and having a terminal alkoxysilyl group are not specifically limited. For example, the ratio of the polyisocyanate (A4) to the total of the polyol (A1), the polyol (A2), and the tertiary amino-group-containing, isocyanate-reactive compound (A3) can be selected within such ranges that the equivalent ratio [NCO/(NCO-reactive group)] of isocyanate groups in the polyisocyanate (A4) to total isocyanate-reactive groups including hydroxyl groups in the polyol (A1), the polyol (A2), and the tertiary amino-group-containing, isocyanate-reactive compound (A3) is more than 1 and equal to or less than 2.0, preferably 1.02 to 1.5, and more preferably 1.05 to 1.4. If the equivalent ratio of NCO to NCO reactive group is excessively high, for example, if it exceeds 2.0, the reaction in chain extension (crosslinking reaction) may not be significantly controlled, and the dispersibility may be deteriorated. In contrast, if the equivalent ratio of NCO to NCO-reactive group is excessively low, for example, if it is 1 or less, the chain extension and introduction of silyl groups may not be carried out sufficiently, and the resulting composition may exhibit tack in a longer time and have decreased physical properties.

Alternatively, the polyisocyanate (A4) may be contained in such a proportion that the isocyanate group content in the urethane prepolymer containing an anionic group and a tertiary amino group is 0.3 to 7.0 percent by mass, preferably 0.4 to 4.0 percent by mass, and more preferably 0.5 to 3.0 percent by mass. If the isocyanate group content is excessively high, for example, if it exceeds 7.0 percent by mass, the reaction (crosslinking reaction) in chain extension may not be significantly controlled, and the dispersibility may be deteriorated. In contrast, if the isocyanate group content is excessively low, for example, if it is less than 0.3 percent by mass, it takes a very long time to carry out the reaction, the chain extension and the introduction of silyl groups may not be carried out sufficiently, the water resistance may decrease, and the curing rate may decrease.

The polyol (A2) is preferably contained in such a proportion that the anionic group content of the urethane prepolymer (A) containing an anionic group and a tertiary amino group and having a terminal alkoxysilyl group is 0.4 meq/g or more, for example, 0.4 to 0.7 meq/g, and preferably 0.4 to 0.6 meq/g. If the anionic group content is excessively high, the resulting water-based silylated urethane composition may have an excessively high viscosity, thereby show decreased workability and exhibit decreased water resistance after curing. In contrast, if the anionic group content is excessively low, for example, if it is less than 0.4 meq/g, the water-based silylated urethane composition may show decreased dispersion stability of the resin components and exhibit decreased tackiness.

The tertiary amino-group-containing, isocyanate-reactive compound (A3) is preferably contained in such a proportion that the tertiary amino group content of the urethane prepolymer (A) containing an anionic group and a tertiary amino group and having a terminal alkoxysilyl group is 0.15 meq/g or more, for example, 0.15 to 0.8 meq/g, and preferably 0.15 to 0.6 meq/g. If the tertiary amino group content is excessively high, the urethane prepolymer (A) containing an anionic group and a tertiary amino group and having a terminal alkoxysilyl group and/or the water-based silylated urethane composition may have an excessively high viscosity and exhibit decreased workability. In contrast, if the tertiary amino group content is excessively low, for example, if it is less than 0.15 meq/g, the urethane prepolymer (A) containing an anionic group and a tertiary amino group and having a terminal alkoxysilyl group may have decreased tackiness, develop tackiness in a longer time, and show decreased initial bond strength.

The isocyanate-reactive-group-containing alkoxysilane (A5) is preferably contained in such a proportion that the silicon atom content of the urethane prepolymer (A) containing an anionic group and a tertiary amino group and having a terminal alkoxysilyl group is, for example, 0.05 to 0.4 meq/g, and preferably 0.05 to 0.3 meq/g. If the silicon content is excessively high, for example, if it exceeds 0.4 meq/g, the prepolymer has a lower molecular weight, and the resulting composition may thereby have decreased tackiness and often develop tackiness in a longer time. In contrast, if it is excessively low, for example, if it is less than 0.05 meq/g, the prepolymer may have an excessively high molecular weight, the resulting film may become excessively hard upon tack development, show poor wettability, exhibit decreased tackiness instead and have a shorter tack holding time. The tackiness, time to develop tack, tack holding time can be controlled by controlling the silicon content (molecular weight of the prepolymer).

The amount of the unsaturated carboxylic acid ester (A5-3), if used, is preferably such that at least one secondary amino group remains in the ester-modified amino-group-containing alkoxysilane (A5-4). The amount can be selected, for example, within ranges of from about 0.8 to about 2 moles per 1 mole of primary amino groups and secondary amino groups in the primary amino-group-containing alkoxysilane. The unsaturated carboxylic acid ester (A5-3) can be used under such conditions that at least a secondary amino group remains.

The amount of the amine-based chain extender (A6) is preferably an equivalent amount to the amount of terminal isocyanate groups (terminal isocyanate groups remaining and being not alkoxysilylated) in the urethane prepolymer containing an anionic group and a tertiary amino group and having partially alkoxysilylated terminals as a reaction product between the urethane prepolymer containing an anionic group and a tertiary amino group and the isocyanate-reactive-group-containing alkoxysilane (A5). The amount can be selected, for example, within ranges of from 0.5 to 1.0 equivalent, per 1 equivalent of the isocyanate group.

It is preferred in the present invention that the molar ratio of tertiary amino groups to anionic groups in the molecule of the urethane prepolymer (A) containing an anionic group and a tertiary amino group and having a terminal alkoxysilyl group is 0.2 to 1, and preferably 0.3 to 0.9. The time to develop tackiness can be efficiently shortened and the tackiness can be increased by setting the molar ratio of tertiary amino groups to anionic groups in the molecule of the urethane prepolymer (A) containing an anionic group and a tertiary amino group and having a terminal alkoxysilyl group at 0.2 to 1.

The molar ratio of tertiary amino groups to alkoxysilyl groups in the molecule of the urethane prepolymer (A) containing an anionic group and a tertiary amino group and having a terminal alkoxysilyl group is preferably 1.0 to 5.5, more preferably 1.5 to 5.5, and further more preferably 1.6 to 4.0. The time to develop tackiness can be efficiently shortened and the initial bond strength can be increased by setting the molar ratio of tertiary amino groups to alkoxysilyl groups in the molecule of the urethane prepolymer (A) containing an anionic group and a tertiary amino group and having a terminal alkoxysilyl group at 1.0 to 5.5 (by controlling the molecular weight and intermolecular interaction of the polymer).

According to the present invention as is described above, the ratio between anionic groups and tertiary amino groups and/or the ratio between tertiary amino groups and alkoxysilyl groups in the molecule of the urethane prepolymer (A) containing an anionic group and a tertiary amino group and having a terminal alkoxysilyl group is preferably controlled. More preferably, the ratio among anionic groups, tertiary amino groups and alkoxysilyl groups is preferably controlled. Thus, the interaction between the anionic group and the tertiary amino group rapidly increases upon scattering of a very small amount of water, and silanol groups undergo condensation with each other to thereby gelate rapidly. This significantly shortens the time to develop tack as compared with conventional water-based adhesives and enables development of satisfactory tackiness. Specifically, excellent performance can be exhibited by synergistic effects of the anionic group, tertiary amino group, and silyl group.

### [Basic compound (B)]

The basic compound (B) can be any of basic inorganic compounds and basic organic compounds. These basic compounds (B) can be used alone or in combination. Preferred examples of the basic inorganic compounds are alkali metal compounds including alkali metal hydroxides such as sodium hydroxide and potassium hydroxide; alkali metal carbonates such as sodium carbonate and potassium carbonate; alkali metal hydrogen carbonates such as sodium hydrogen carbonate and potassium hydrogen carbonate; and alkali metal acetates such as sodium acetate and potassium acetate, as well as alkaline earth metal compounds including alkaline earth metal hydroxide such as magnesium hydroxide; and alkaline earth metal carbonates such as magnesium carbonate, and ammonia.

Preferred examples of the basic organic compounds are amine compounds such as aliphatic amines, aromatic amines, and basic nitrogen-containing heterocyclic compounds. The aliphatic amines include, for example, trialkylamines such as trimethylamine, triethylamine, tripropylamine, triisopropylamine, tributylamine, triisobutylamine, tri-s-butylamine, tri-t-butylamine, tripentylamine, and trihexylamine; dialkylamines such as dimethylamine, diethylamine, and dibutylamine; monoalkylamines such as methylamine, ethylamine, and butylamine; trialcoholamines such as trimethanolamine, triethanolamine, tripropanolamine, triisopropanolamine, tributanolamine, tripentanolamine, triisopentanolamine, and trihexanolamine; dialcoholamines such as dimethanolamine and diethanolamine; and monoalcoholamines such as methanolamine and ethanolamine, as well as ethylenediamine and diethylenetriamine. The aromatic amine include, for example, N,N-dimethylaniline. Examples of the basic nitrogen-containing heterocyclic compounds are cyclic amines such as morpholine, piperidine, and pyrrolidine, as well as pyridine, α-picoline, β-picoline, γ-picoline, quinoline, and N-methylmorpholine.

The basic compound (B) for use in the present invention is preferably ammonia and/or amine compounds. Of amine compounds, tertiary amine compounds such as trialkylamines and trialcoholamines are specifically preferred.

### [Water (C)]

The water (C) for use in the present invention can for example be tap water (service water), ion-exchanged water, or pure water.

### [Water-based silylated urethane composition]

The water-based silylated urethane composition according to the present invention comprises a urethane prepolymer (A) containing an anionic group and a tertiary amino group and having a terminal alkoxysilyl group, a basic compound (B), and water (C). Specifically, the water-based silylated urethane composition can be a mixture of the urethane prepolymer (A) containing an anionic group and a tertiary amino group and having a terminal alkoxysilyl group, the basic compound (B), and the water (C), or a reaction composition comprising a reaction product among the urethane prepolymer (A) containing an anionic group and a tertiary amino group and having a terminal alkoxysilyl group, the basic compound (B), and the water (C) as a result of the mixing. An example of the reaction between the urethane prepolymer (A) containing an anionic group and a tertiary amino group and having a terminal alkoxysilyl group and the basic compound (B) is a neutralization reaction in which part or all of anionic groups in the urethane prepolymer (A) containing an anionic group and a tertiary amino group and having a terminal alkoxysilyl group are neutralized with the basic compound (B). Specifically, the anionic group or groups in the urethane prepolymer (A) containing an anionic group and a tertiary amino group and having a terminal alkoxysilyl group forms a salt as a result of the reaction between the urethane prepolymer (A) containing an anionic group and a tertiary amino group and having a terminal alkoxysilyl group and the basic compound (B).

The reaction between the urethane prepolymer (A) containing an anionic group and a tertiary amino group and having a terminal alkoxysilyl group and the water (C) can for example be a hydrolysis reaction in which terminal alkoxysilyl group or groups in the urethane prepolymer (A) containing an anionic group and a tertiary amino group and having a terminal alkoxysilyl group is hydrolyzed by the action of the water (C). Specifically, part or all of terminal alkoxysilyl groups in the urethane prepolymer (A) containing an anionic group and a tertiary amino group and having a terminal alkoxysilyl group are converted into silanol group and/or siloxane bond as a result of the reaction between the urethane prepolymer (A) containing an anionic group and a tertiary amino group and having a terminal alkoxysilyl group and the water (C). In other words, at least one alkoxy group of terminal alkoxysilyl groups in the urethane prepolymer (A) containing an anionic group and a tertiary amino group and having a terminal alkoxysilyl group is affected by the hydrolysis reaction with the water (C). The "silanol group" means a group comprising silicon atom having at least one hydroxyl group and may have one or more substituents such as alkoxy groups.

Consequently, examples of the reaction product among the urethane prepolymer (A) containing an anionic group and a tertiary amino group and having a terminal alkoxysilyl group , the basic compound (B) and the water (C) include a water-based silanolated urethane prepolymer in which anionic group or groups have been neutralized with the basic compound (B) to form a salt of the anionic group, and part or all of terminal alkoxysilyl groups are hydrolyzed by the action of the water (C) to form silanol group and/or siloxane bond in the urethane prepolymer (A) containing an anionic group and a tertiary amino group and having a terminal alkoxysilyl group. Namely, the water-based silylated urethane composition according to the present invention is preferably a water-based silylated urethane composition containing the above-mentioned water-based silanolated urethane prepolymer.

Thus, the water-based silylated urethane composition according to the present invention can be prepared by mixing the urethane prepolymer (A) containing an anionic group and a tertiary amino group and having a terminal alkoxysilyl group, the basic compound (B), and the water (C), in which the order of mixing these components is not specifically limited. The water-based silylated urethane composition according to the present invention can be prepared as an aqueous solution or aqueous dispersion by mixing the basic compound (B) and the water (C) with the urethane prepolymer (A) containing an anionic group and a tertiary amino group and having a terminal alkoxysilyl group and preferably stirring the mixture vigorously to accelerate reactions such as neutralization reaction and hydrolysis reaction.

According to the present invention, the basic compound (B) and/or the water (C) can be used upon the preparation of the urethane prepolymer (A) containing an anionic group and a tertiary amino group and having a terminal alkoxysilyl group. Specifically, the reaction can be carried out in the presence of the basic compound (B), for example, by adding the basic compound (B) before or during the reaction between the isocyanate-reactive-group-containing alkoxysilane (A5) and a reaction product among the polyol (A1), the polyol (A2),the tertiary amino-group-containing, isocyanate-reactive compound (A3) and the polyisocyanate (A4).

The basic compound (B) for use in the present invention can be used not only upon the reaction between the urethane prepolymer containing an anionic group and a tertiary amino group and the isocyanate-reactive-group-containing alkoxysilane (A5) but also at any time in preparation processes of the urethane prepolymer (A) containing an anionic group and a tertiary amino group and having a terminal alkoxysilyl group and the water-based silylated urethane composition. More specifically, the basic compound (B) can be used, for example, during or after any reaction such as the reaction among the polyol (A1), the polyol (A2), the tertiary amino-group-containing, isocyanate-reactive compound (A3), and the polyisocyanate (A4) to prepare the urethane prepolymer containing an anionic group and a tertiary amino group, or the reaction between the urethane prepolymer containing an anionic group and a tertiary amino group and the isocyanate-reactive-group-containing alkoxysilane (A5) to prepare the urethane prepolymer (A) containing an anionic group and a tertiary amino group and having a terminal alkoxysilyl group. The basic compound (B) can also be used upon dispersing of the urethane prepolymer (A) containing an anionic group and a tertiary amino group and having a terminal alkoxysilyl group in the water (C).

The water (C) may be added, for example, before or during chain extension as a result of the reaction between the amine-based chain extender (A6) and the urethane prepolymer containing an anionic group and a tertiary amino group and having partially alkoxysilylated terminals, which urethane prepolymer is a reaction product between the isocyanate-reactive-group-containing alkoxysilane (A5) and a reaction product among the polyol (A1), the polyol (A2), the tertiary amino-group-containing, isocyanate-reactive compound (A3), and the polyisocyanate (A4). Thus, the chain extension reaction can be carried out during or after dispersion of the urethane prepolymer containing an anionic group and a tertiary amino group and having partially alkoxysilylated terminals into water.

The amount of the basic compound (B) for use in the present invention can be selected within ranges of from about 50 to about 120 percent by mole, and preferably from about 80 to about 110 percent by mole, relative to anionic groups in the urethane prepolymer (A) containing an anionic group and a tertiary amino group and having a terminal alkoxysilyl group.

The amount of the water (C) for use in present invention can be selected within ranges of from about 65 to about 900 parts by mass, and preferably from about 100 to about 400 parts by mass, to 100 parts by mass of the urethane prepolymer (A) containing an anionic group and a tertiary amino group and having a terminal alkoxysilyl group.

The hydroxyl value (OHV) of the water-based silylated urethane composition according to the present invention is not specifically limited and can be selected, for example, within ranges of from about 60 to 400 mg-KOH/g, and preferably from about 80 to about 350 mg-KOH/g. The resin content thereof is not specifically limited and can be selected, for example, within ranges of from about 10 to 60 percent by mass, and preferably from about 20 to about 50 percent by mass.

The water-based silylated urethane composition according to the present invention can be a fully aqueous silylated urethane composition free from organic solvents. The water-based silylated urethane composition may further comprise one or more hydrophilic organic solvents (water-soluble organic solvents) such as ketones and lower alcohols, typically for modifying the viscosity of an aqueous solution or aqueous dispersion of the composition. Each of these organic solvents can be used alone or in combination. More specifically, the ketones include acetone. The lower alcohols include monohydric alcohols such as methanol, ethanol, propanol, isopropanol, butanol, isobutanol, s-butanol, t-butanol, pentanol, and hexanol; and polyhydric alcohols such as ethylene glycol, propylene glycol, 1,2-butanediol, 1,3-butanediol, 1,4-butanediol, 1,6-hexanediol, and glycerol. The water-soluble organic solvents also include propylene carbonate; dimethyl carbonate; trimethyl phosphate; diethers, diesters or diallyl ethers of polyoxyethylenes; diether or diacetate of glycol; 1,3-dioxolane; and N-methyl-2-pyrrolidone. The amount of the organic solvent can be set according typically to the magnitude of viscosity to be modified and can be selected, for example, within ranges of from about 0 to about 100 parts by mass, and preferably from about 0 to about 50 parts by mass, to 100 parts by mass of the urethane prepolymer (A) containing an anionic group and a tertiary amino group and having a terminal alkoxysilyl group.

The water-based silylated urethane composition may further comprise a hydrophilic solvent for modifying wettability. Examples of the hydrophilic solvent for modifying wettability are surfactants such as N-methyl-2-pyrrolidone and polyoxyethylene alkyl ethers; sodium alginate; mucopolysaccharides; and sodium acrylate.

The water-based silylated urethane composition according to the present invention may further comprise, for example, any of additives or components and solvents. Examples of the additives or components are fillers, plasticizers, age resistors, ultraviolet absorbents, antioxidants, thermal stabilizers, coloring agents (e.g., pigments and dye stuffs), fungicides, wettability accelerators, viscosity improvers, flavors, tackifiers (e.g., emulsion tackifiers), coupling agents (e.g., titanate coupling agents and aluminum coupling agents), photo-curing catalysts, emulsifiers, surfactants, emulsions or latices, crosslinking agents, moisturizing agents, and antifoaming agents. Examples of the fillers are calcium carbonate or treated calcium carbonate, fumed silica, clay, talc, various balloons, Neuburg silica, kaolin, and aluminum silicate.
The plasticizers include phthalic esters such as dioctyl phthalate and dibutyl phthalate; and aliphatic carboxylic acid esters such as dioctyl adipate and dibutyl sebacate. Examples of the tackifiers are emulsion tackifiers such as stabilized rosin esters, polymerized rosin esters, terpene phenols, and petroleum resins. Examples of the crosslinking agents are isocyanate crosslinking agents, epoxy crosslinking agents, carbodiimide crosslinking agents, aziridine crosslinking agents, polyethyleneimine crosslinking agents, melamine crosslinking agents, and colloidal silica. The solvent for use herein can be any solvent, as long as it has good compatibility or miscibility with the water-based silylated urethane composition comprising the urethane prepolymer (A) containing an anionic group and a tertiary amino group and having a terminal alkoxysilyl group, the basic compound (B), and the water (C).

### [Water-based adhesive and so on]

The water-based silylated urethane composition can be used typically as water-based adhesives and water-based coating agents such as water-based paints and can be advantageously used as water-based adhesives, of which it is typically preferably used as water-based adhesives for wrapping and water-based contact adhesives. The water-based silylated urethane composition can also be used typically as binders, laminate materials, sealers, primers, siding agents, and sealing materials, in addition to water-based adhesives and water-based coating agents. Specifically, treating agents such as water-based adhesives and water-based coating agents each comprise the water-based silylated urethane composition.

Such water-based adhesives and water-based coating agents comprising the water-based silylated urethane composition, for example, have excellent initial adhesion properties such as initial bond strength and initial adherence, since the water-based silylated urethane composition has the above-mentioned configuration. More specifically, the water-based silylated urethane composition uses the urethane prepolymer (A) containing an anionic group and a tertiary amino group and having a terminal alkoxysilyl group as its polymer component and can develop satisfactory tackiness in a short time and exhibit excellent initial bond strength and initial adherence. While having not yet been clarified, this is probably because intramolecular and/or intermolecular interactions between the anionic group and the tertiary amino group occur and thereby an apparent molecular weight increases rapidly upon curing of the urethane prepolymer (A) containing an anionic group and a tertiary amino group and having a terminal alkoxysilyl group, even if water in the water-based silylated urethane composition does not so decrease.

In addition, by setting the ratio between the alkoxysilyl group and the tertiary amino group in the urethane prepolymer (A) containing an anionic group and a tertiary amino group and having a terminal alkoxysilyl group, the composition can efficiently develop tackiness due to the original molecular weight of the urethane prepolymer (A) containing an anionic group and a tertiary amino group and having a terminal alkoxysilyl group and tackiness derived from interactions relating to the tertiary amino group in a well-balanced manner. This also contributes to a significantly shortened time to develop satisfactory tackiness and effective increase in initial bond strength.

The water-based silylated urethane composition according to the present invention rapidly develops satisfactory tackiness even when it still holds water. This is because interactions relating to the tertiary amino group occur, if merely a trace amount of water scatters, to thereby develop appropriate tackiness (increased viscosity); the composition has optimum tackiness by controlling the molecular weight (average molecular weight) of the urethane prepolymer (A) containing an anionic group and a tertiary amino group and having a terminal alkoxysilyl group to be appropriate; and the crosslinking reaction proceeds even while the composition holds water to thereby enable rapid development of satisfactory tackiness.

In addition, by using the amine-based chain extender (A6) as a chain extender, the composition cures at a higher rate.

Above all, silanol groups of the water-based silanolated urethane prepolymer are very stable even being in water, since the water-based silylated urethane composition comprises the urethane prepolymer (A) containing an anionic group and a tertiary amino group and having a terminal alkoxysilyl group, the basic compound (B), and the water (C). While having not yet been clarified, the stability is improved probably because the silanol groups are protected by water molecules present in a large quantity in the system to thereby prevent or inhibit a condensation reaction between silanol groups. In addition, the stability is further increased probably because the silanol groups are also protected by secondary amino group derived from an amino-group-containing alkoxysilane (A5-1) as the alkoxysilane compound (A5) containing an isocyanate-reactive group, and/or a substituent bound to the nitrogen atom of the tertiary amino group to thereby prevent or inhibit a condensation reaction between silanol groups. Examples of the substituent herein are a long-chain subsistent or an ester moiety thereof derived from an unsaturated carboxylic acid ester (A5-3).

Consequently, water-based adhesives and water-based coating agents each comprising the water-based silylated urethane composition can be used as one-component treating agents such as one-component water-based adhesives and one-component water-based coating agents.

The water-based silylated urethane composition is rapidly cured under such conditions that water in the system is dried and reduced by the action typically of evaporation or volatilization, for example, when it is applied to an open surface or a porous material. The curing rate in this process depends little on the drying rate of water. In particular, when the water-based silylated urethane composition is used as water-based adhesives or water-based coating agents such as water-based paints, the curing rates of the water-based adhesives and the water-based coating agents less depend on the drying rate of water than those of conventional water-based adhesives and water-based coating agents. This is because silanol groups in the water-based silanolated urethane prepolymer undergo a condensation reaction to cause curing (crosslinking) when water in the water-based composition evaporates and decrease after application. In other words, this is probably because the condensation reaction of silanol groups of the water-based silanolated urethane prepolymer in the water-based composition predominantly relates to curing.

The crosslinking reaction proceeds as a result of reduction in water, and it can proceed even when water remains to some extent, and the composition can develop cohesive force even while it still holds water.

In addition, the composition has much increased cohesive force, since the urethane prepolymer (A) containing an anionic group and a tertiary amino group and having a terminal alkoxysilyl group has undergone chain extension by the action of the amine-based chain extender (A6) and thereby has urea bonds in the molecule.

The water-based silylated urethane composition according to the present invention therefore develops satisfactory tackiness in a short time, has excellent initial adhesion properties such as initial bond strength, is cured at a very high rate and achieves satisfactory quick curing.

The high curing rate and increased initial adherence are achieved probably also because an ion center (a salt of an anionic group, such as a carboxylic acid salt) having been introduced into the molecule of the water-based silanolated urethane prepolymer serves as an accelerator catalyst for the condensation reaction between silanol groups. The ion center has been introduced for converting the prepolymer to be aqueous.

As is described above, the water-based silylated urethane composition has a high curing rate, develops satisfactory tackiness in a short time, and has excellent initial adhesion properties such as initial bond strength and initial adherence, even though it is water-based (aqueous). Consequently, treating agents including water-based adhesives such as water-based adhesives for wrapping which use the water-based silylated urethane composition can exhibit productivity equivalent to those of treating agents using conventional solvent-based adhesives. This will be illustrated in detail by taking, as an example, a water-based adhesive for wrapping using the water-based silylated urethane composition. Specifically, the water-based adhesive for wrapping is applied to a plastic sheet, and the applied surface is attached to a substrate such as a porous board. Examples of the porous board are laminated wood, particle board, and MDF. In this procedure, the water-based adhesive develops satisfactory tackiness in a short time and exhibits excellent initial bond strength. Thus, the substrate can be wrapped with the plastic sheet with productivity equivalent to that in the case of using solvent-based adhesives for wrapping. In addition, the plastic sheet can be rapidly applied to the substrate with excellent adherence without causing a gap between the plastic sheet and the substrate, even if the substrate has a convex-concave shape on its surface. This is because of the high initial bond strength of the adhesive.

Such water-based adhesives comprising the water-based silylated urethane composition have excellent storage stability and can be prepared as one-component water-based adhesives. By formulating a water-based adhesive for wrapping as a one-component adhesive, therefore, the workability in wrapping operation can be significantly improved. This also contributes to further increased productivity. Specifically, most conventional adhesives for wrapping use two-component solvent-based adhesives which require mixing process of two components, i.e., a base component and a curing agent, upon wrapping operation. According to the present invention, however, the mixing process of a base component and a curing agent can be omitted by formulating such an adhesive for wrapping as a one-component water-based adhesive for wrapping.

The term "adhesives for wrapping" (e.g., water-based adhesives for wrapping) means adhesives for use in wrapping a substrate with a plastic sheet by laminating the plastic sheet onto the substrate with the interposition of an adhesive layer. A substrate is wrapped with a plastic sheet generally by applying an adhesive for wrapping to the plastic sheet, and laminating the surface of the plastic sheet carrying the adhesive for wrapping to the substrate. The wrapping procedure of the substrate with the plastic sheet, however, is not specifically limited. Wrapping apparatuses called, for example, wrapping machines, profile machines, machines for curved surface adhesion, membrane presses (e.g., vacuum membrane presses), wrapping machines using soft rolls, and four-side laminators are industrially used in such wrapping, and a variety of wrapping apparatuses is commercially available.

The substrate is preferably, for example, any of substrates made of porous materials, of which porous substrates made of wood including wood boards such as laminated wood, particle boards, and MDFs (porous wood materials) are typically preferred. The substrate can have any shape not specifically limited and may be, for example, a substrate having a convex-concave shape on its surface or a sheet-like or plate-like substrate having a flat surface.

The plastic sheet is not specifically limited, and preferred examples thereof are polyester sheets such as polyethylene terephthalate sheets; poly(vinyl chloride) sheets; polyolefin sheets such as polyethylene sheets and polypropylene sheets. The substrate can also be a substrate made of other resins. The size, thickness and other parameters of the plastic sheet are not specifically limited and can be set as appropriate.

The water-based silylated urethane composition according to the present invention can have a configuration having contact adhesiveness and can thereby be used as a water-based contact adhesive. Such a water-based contact adhesive using the water-based silylated urethane composition exhibits good workability in adhesion and enables easy adhesion of plural adherends, since the contact adhesive has a high initial bond strength, thereby does not require prepressing upon lamination of adherends, or it takes a shorter time to prepress the adherends. In particular, the water-based contact adhesive is very advantageous in having excellent initial bond strength even if it is completely free from organic solvents and is fully aqueous.

The polymer (A) containing an anionic group and a tertiary amino group and having a terminal alkoxysilyl group in the water-based silylated urethane composition may be a polymer having a relatively low molecular weight. For example, the number-average molecular weight of the polymer can be selected within ranges of from about 3000 to about 50000, and preferably from about 10000 to about 30000. The polymer (A) after curing has siloxane bonds and becomes a polymer having a higher molecular weight.

As is described above, the water-based silylated urethane composition can be used as water-based adhesives and water-based coating agents and is preferably used as water-based adhesives. Of such water-based adhesives, the composition is typically preferably used as water-based adhesives for wrapping and water-based contact adhesives.

In particular, the adhesives are water-based adhesives, thereby have excellent handleability and workability and have high safety to the human body and environment. These advantages are significant when the adhesives are completely free from organic solvents and are fully aqueous.

Such water-based adhesives (in particular water-based contact adhesives) and water-based coating agents containing the water-based silylated urethane composition can develop good bond strength and/or adherence to not only porous materials such as paper but also nonporous materials such as metals and glass. This is because of silanol groups contained in the polymer (A) containing an anionic group and a tertiary amino group and having a terminal alkoxysilyl group. Specifically, a variety of substrates can be used as substrates, such as adherends and articles to be coated, to which the water-based adhesives and the water-based coating agents are applied.

The substrate for use herein can be, for example, any of porous materials and nonporous materials. More specifically, examples of materials for the adherends are wood materials such as wood, laminated wood, chip boards, particle boards, and hard boards; inorganic materials such as slate boards, calcium silicate boards, cement mortar, and tiles; plastic materials such as melamine resin decorative laminated sheets, bakelite boards, styrene foam, and various plastic films or molded articles including poly(vinyl chloride) films or molded articles, polyester films or molded articles, polystyrene films or molded articles, and polyolefin films or molded articles; rubber materials such as naturally-occurring rubber, synthetic rubber, and silicone rubber; paper materials such as corrugated cardboard, cardboard, and kraft paper; hard-to-adhesive paper materials including converted paper such as converted paper having treated surface (e.g., moisture-proof paper); glass materials; metal materials made of, for example, iron, aluminum, stainless steel, or copper); leather materials; and fibrous materials such as fabrics and nonwoven fabrics.

Thus, these water-based adhesives and water-based coating agents containing the water-based silylated urethane composition can be applied to substrates made of a wide variety of materials and can be used in adhesion of nonporous materials with each other as a result of contact adhesion.

Substrates to be laminated as a result of adhesion can be those comprising the same material or those comprising different materials. Each of these substrates can be used alone or in combination.

The method of laminating adherends using a water-based adhesive containing the water-based silylated urethane composition is not specifically limited. The adherends can be laminated, for example, by applying the water-based adhesive to one or both of adherends and overlaying the adherends with each other immediately thereafter; or by contact adhesion process comprising the steps of applying the water-based adhesive to one or both of adherends, leaving the adherends stand for a predetermined time to allow the adhesive to develop tacky adhesiveness (tackiness) and then laminating the adherends with each other. The contact adhesion process for use in the present invention includes not only a process in which the adhesive is applied to surfaces to be laminated of the two adherends, the adherends are left for a predetermined time to allow the adhesive to develop tacky adhesiveness, and the two adherends in this state are laminated and bonded, as specified in Japanese Industrial Standards (JIS) K 6800; but also a process in which the adhesive is applied to a laminating surface of one of the two adherends, the applied adherend is left stand for a predetermined time to allow the adhesive to develop tacky adhesiveness, and the two adherends are laminated and bonded in this state. Specifically, the "contact adhesion" in the present invention means a process in which the adhesive is applied to a laminating surface of at least one of adherends to be laminated, the adherend(s) is left stand for a predetermined time to allow the adhesive to develop tacky adhesiveness, and the two adherends are laminated and bonded while the adhesive developing tacky adhesiveness.

As is described above, the water-based silylated urethane composition according to the present invention has the above-mentioned configuration, thereby has high safety, develops satisfactory tackiness in a short time, has excellent initial bond strength, and, in addition, can exhibit productivity equivalent to that in the use of solvent-based adhesives. Consequently, the water-based silylated urethane composition is useful as water-based adhesives for wrapping and water-based contact adhesives.

### EXAMPLES

The present invention will be illustrated in further detail with reference to several examples below which by no means limit the scope of the present invention. All parts and percentages are by mass, unless otherwise specified. The materials used in the examples and comparative examples are as follows.

### [Anionic-group-free polyol compound (A1)]

(1) A product under the trade name of "PTMG 2000" [a product of Mitsubishi Chemical Corporation, a polytetramethylene ether glycol having a number-average molecular weight of 2000 and a hydroxyl value of 57.4 mg-KOH/g; hereinafter referred to as "polyol (A1-a)"]
(2) A product under the trade name of "NS 2471" [a product of Asahi Denka Kogyo K.K., a polyester diol having a number-average molecular weight of 2000 and a hydroxyl value of 56.1 mg-KOH/g; hereinafter referred to as "polyol (A1-b)"]
(3) 1,4-Butanediol [hereinafter referred to as "polyol (A1-c)"]

### [Anionic-group-containing polyol compound (A2)]

(1) 2,2-Dimethylolpropionic acid [having a hydroxyl value of 837.3 mg-KOH/g; hereinafter referred to as "polyol (A2-a)"]
(2) 2,2-Dimethylolbutanoic acid [having a hydroxyl value of 754.0 mg-KOH/g; hereinafter referred to as "polyol (A2-b)"]

### [Compound (A3) containing a tertiary amino group and an isocyanate-reactive group]

(1) N-Methyl-diethanolamine [N,N-bis(2-hydroxyethyl)-N-methylamine; having a hydroxyl value of 941.6 mg-KOH/g; hereinafter referred to as "polyol (A3-a)"]
(2) N-n-Butyl-diethanolamine [N,N-bis(2-hydroxyethyl)-N-n-butylamine; having a hydroxyl value of 695.9 mg-KOH/g; hereinafter referred to as "polyol (A3-b)"]
(3) N,N-bis[2-Hydroxyethyl-poly(oxyethylene-oxypropylene)]-N-ethylamine [so-called "amine polyol"; having a number-average molecular weight of 2000 and a hydroxyl value of 55.7 mg-KOH/g; hereinafter referred to as "polyol (A3-c)"]

### [Polyisocyanate compound (A4)]

(1) Isophorone diisocyanate [having an isocyanate content (NCO content) of 37.8%, IPDI; hereinafter referred to as "polyisocyanate (A4-a)"]

### [Isocyanate-reactive-group-containing alkoxysilane compound (A5)]

(1) A product under the trade name of "KBM 903" [a product of Shin-Etsu Chemical Co., Ltd., γ-aminopropyltrimethoxysilane; hereinafter referred to as "amino-group-containing alkoxysilane (A5-a)"]
(2) A product under the trade name of "KBM 573" [a product of Shin-Etsu Chemical Co., Ltd., N-phenyl-γ-aminopropyltrimethoxysilane; hereinafter referred to as "amino-group-containing alkoxysilane (A5-b)"]
(3) A reaction product [hereinafter referred to as "amino-group-containing alkoxysilane (A5-c)"] prepared by mixing a product under the trade name of "KBM 602" [a product of Shin-Etsu Chemical Co., Ltd.; N-β-(aminoethyl)-γ-aminopropylmethyldimethoxysilane] with 2-ethylhexyl acrylate in a molar ratio of the former to the latter of 1:2, followed by reaction at 50°C for seven days.
(4) A reaction product [hereinafter referred to as "amino-group-containing alkoxysilane (A5-d)"] prepared by mixing a product under the trade name of "KBM 602" [a product of Shin-Etsu Chemical Co., Ltd., N-β-(aminoethyl)-γ-aminopropylmethyldimethoxysilane] with n-butyl acrylate in a molar ratio of the former to the latter of 1:2, followed by reaction at 50°C for seven days.
(5) A reaction product [hereinafter referred to as "amino-group-containing alkoxysilane (A5-e)"] prepared by mixing a product under the trade name of "KBM 903" [a product of Shin-Etsu Chemical Co., Ltd., γ-aminopropyltrimethoxysilane] with 2-ethylhexyl acrylate in a molar ratio of the former to the latter of 1:1, followed by reaction at 50°C for seven days.

### [Chain extender]

(1) Isophoronediamine [an amine-based chain extender; hereinafter referred to as "chain extender (A6-a)"]
(2) Ethylenediamine [an amine-based chain extender; hereinafter referred to as "chain extender (A6-b)"]

### [Basic compound (B)]

(1) Triethylamine

### [Water (C)]

(1) Ion-exchanged water (deionized water)

### (EXAMPLE 1)

In a four-necked flask equipped with a nitrogen inlet tube, a thermometer, a condenser and a stirrer were placed 150 parts of the polyol (A1-a), 20 parts of the polyol (A2-b), 8 parts of the polyol (A3-a), 75.2 parts of the polyisocyanate (A4-a), and 100 parts of methyl ethyl ketone (MEK), followed by reaction at temperatures of 80°C to 85°C under nitrogen gas stream for six hours, to thereby yield a reaction mixture containing a urethane prepolymer containing a carboxyl group and a tertiary amino group, having a terminal isocyanate group, and having a content of residual isocyanate groups of 2.0%.

Next, 6.5 parts of the amino-group-containing alkoxysilane (A5-a) was added to the whole quantity of the reaction mixture containing the urethane prepolymer containing carboxyl group and tertiary amino group and having terminal isocyanate group, followed by reaction at temperatures of 80°C to 85°C under nitrogen gas stream for one hour, to thereby yield a reaction mixture containing a urethane prepolymer containing carboxyl group and tertiary amino group and having terminal isocyanate group and terminal alkoxysilyl group.

The reaction mixture containing the urethane prepolymer containing carboxyl group and tertiary amino group and having terminal isocyanate group and terminal alkoxysilyl group was cooled to 40°C, and 13.6 parts of triethylamine was added. To the resulting mixture stirred at high speed was added an aqueous solution containing 5.7 parts of the chain extender (A6-a) in 496 g of deionized water to thereby yield a dispersion. The dispersion, from which MEK was distilled off under reduced pressure at 45°C to 50°C, was then mixed with deionized water to thereby yield a water-based silylated urethane composition having a solid content of 36%.

### (EXAMPLES 2 to 13)

A series of water-based silylated urethane compositions according to Examples 2 to 13 was prepared by the procedure of Example 1, except for having the compositions in Table 1 or 2.

### (COMPARATIVE EXAMPLES 1, 2, and 6)

A series of water-based silylated urethane compositions or water-based urethane compositions was prepared by the procedure of Example 1, except for having the compositions in Table 3.

### (COMPARATIVE EXAMPLE 3)

A reaction mixture containing a urethane prepolymer was prepared by the procedure of Example 1, except for having the composition in Table 3. The urethane prepolymer contained carboxyl group and tertiary amino group, had terminal isocyanate and had a content of residual isocyanate groups of 2%. Next, 20.6 parts of the amino-group-containing alkoxysilane (A5-c) and 3.0 parts of 1,4-butanediol as a chain extender were added to the whole quantity of the reaction mixture of the urethane prepolymer containing carboxyl group and tertiary amino group and having terminal isocyanate, followed by mixing and reaction at temperatures of 80°C to 85°C under nitrogen gas stream for two hours, to thereby yield a reaction mixture containing a urethane prepolymer containing carboxyl group and tertiary amino group and having terminal alkoxysilyl group. After cooling the reaction mixture containing the urethane prepolymer containing carboxyl group and tertiary amino group and having terminal alkoxysilyl group to 40°C, 13.6 parts of triethylamine was added thereto. To the mixture stirred at high speed, 507 parts of deionized water was added to thereby yield a dispersion. The dispersion, from which MEK was distilled off at 45°C to 50°C under reduced pressure, was then mixed with deionized water to thereby yield a water-based silylated urethane composition having a solid content of 36%.

### (COMPARATIVE EXAMPLES 4, 5, and 7)

A series of water-based silylated urethane compositions or water-based urethane compositions according to Comparative Examples 4, 5, and 7 was prepared by the procedure of Comparative Example 3, except for having the compositions in Table 3.

In Tables 1 to 3, the "Carboxyl equivalent (meq/g)" represents the equivalent of carboxyl groups in 1 gram of the resin component of a sample water-based silylated urethane composition or water-based urethane composition. The "Tertiary amino equivalent (meq/g)" represents the equivalent of tertiary amino groups in 1 gram of the resin component of a sample water-based silylated urethane composition or water-based urethane composition. The "Tertiary-N/COOH (equivalent ratio)" represents the ratio of the equivalent of tertiary amino groups to the equivalent of carboxyl groups in 1 gram of the resin component of a sample water-based silylated urethane composition or water-based urethane composition.

The "Si equivalent (meq/g)" represents the equivalent of silicon atoms in 1 gram of the resin component of a sample water-based silylated urethane composition or water-based urethane composition. The "Tertiary-N/Si (equivalent ratio)" represents the ratio of the equivalent of tertiary amino groups to the equivalent of silane atoms in 1 gram of the resin component of a sample water-based silylated urethane composition or water-based urethane composition.

**Table 1**

| | | Example | | | | | | |
|---|---|---|---|---|---|---|---|---|
| | | 1 | 2 | 3 | 4 | 5 | 6 | 7 |
| Polyol (A1-a) | | 150 | 150 | 150 | 150 | 150 | 150 | |
| Polyol (A1-b) | | | | | | | | 150 |
| Polyol (A1-c) | | | | | | | | |
| Polyol (A2-a) | | | | | | | 20 | 20 |
| Polyol (A2-b) | | 20 | 20 | 20 | 20 | 20 | | |
| Polyol (A3-a) | | 8 | 8 | 8 | 8 | 8 | 8 | 8 |
| Polyol (A3-b) | | | | | | | | |
| Polyol (A3-c) | | | | | | | | |
| Polyisocyanate (A4-a) | | 75.2 | 75.2 | 75.2 | 75.2 | 75.2 | 78.7 | 78.3 |
| Amino-containing alkoxysilane (A5-a) | | 6.5 | | | | | | |
| Amino-containing alkoxysilane (A5-b) | | | 9.2 | | | | | |
| Amino-containing alkoxysilane (A5-c) | | | | 20.8 | | | | |
| Amino-containing alkoxysilane (A5-d) | | | | | 16.7 | | | |
| Amino-containing alkoxysilane (A5-e) | | | | | | 13.2 | 13.3 | 13.3 |
| Chain extender (A6-a) | | 5.7 | 5.7 | 5.7 | 5.7 | 5.7 | 5.8 | 5.8 |
| Chain extender (A6-b) | | | | | | | | |
| Triethylamine | | 13.6 | 13.6 | 13.6 | 13.6 | 13.6 | 15.1 | 15.1 |
| Deionized water | | 496 | 501 | 522 | 514 | 508 | 517 | 516 |
| Total | | 775 | 782.7 | 815.3 | 803.2 | 793.7 | 807.9 | 806.5 |
| Carboxyl equivalent (meq/g) | | 0.51 | 0.50 | 0.48 | 0.49 | 0.50 | 0.54 | 0.54 |
| Tertiary amino group (meq/g) | | 0.25 | 0.25 | 0.24 | 0.24 | 0.25 | 0.24 | 0.24 |
| Tertiary-N/COOH (equivalent ratio) | | 0.50 | 0.50 | 0.50 | 0.50 | 0.50 | 0.45 | 0.45 |
| Si equivalent (meq/g) | | 0.14 | 0.13 | 0.13 | 0.13 | 0.13 | 0.13 | 0.13 |
| Tertiary-N/Si (equivalent ratio) | | 1.86 | 1.86 | 1.86 | 1.86 | 1.86 | 1.83 | 1.83 |
| Initial bond strength | left for 10 seconds | D | D | D | D | D | D | D |
| | left for 15 seconds | C | C | C | C | C | C | C |
| | left for 20 seconds | B | B | B | B | B | B | B |
| | left for 25 seconds | B | B | B | B | B | B | B |
| | left for 30 seconds | B | B | B | B | B | B | B |
| | left for 35 seconds | A | A | A | A | A | A | A |
| | left for 40 seconds | E | E | E | E | E | E | E |
| | left for 45 seconds | | | | | | | |
| | left for 50 seconds | | | | | | | |
| | left for 55 seconds | | | | | | | |
| | left for 60 seconds | | | | | | | |
| | left for 65 seconds | | | | | | | |
| | left for 70 seconds | | | | | | | |

**Table 2**

| | | Example | | | | | |
|---|---|---|---|---|---|---|---|
| | | 8 | 9 | 10 | 11 | 12 | 13 |
| Polyol (A1-a) | | 150 | 100 | 150 | 150 | 150 | 150 |
| Polyol (A1-b) | | | | | | | |
| Polyol (A1-c) | | | 5 | | | | |
| Polyol (A2-a) | | | | | | | |
| Polyol (A2-b) | | 25 | 25 | 25 | 25 | 20 | 20 |
| Polyol (A3-a) | | | | 12 | 16 | 5 | 15 |
| Polyol (A3-b) | | 12 | | | | | |
| Polyol (A3-c) | | | 50 | | | | |
| Polyisocyanate (A4-a) | | 85.3 | 80.3 | 91.5 | 99.6 | 69.2 | 89.4 |
| Amino-containing alkoxysilane (A5-a) | | | | | | | |
| Amino-containing alkoxysilane (A5-b) | | | | | | | |
| Amino-containing alkoxysilane (A5-c) | | 22.4 | 14.3 | 15.3 | 15.9 | 10.0 | 30.1 |
| Amino-containing alkoxysilane (A5-d) | | | | | | | |
| Amino-containing alkoxysilane (A5-e) | | | | | | | |
| Chain extender (A6-a) | | 6.2 | 6.7 | 7.2 | | 6.7 | 5.3 |
| Chain extender (A6-b) | | | | | 2.7 | | |
| Triethylamine | | 17.1 | 17.1 | 17.1 | 17.1 | 13.6 | 13.6 |
| Deionized water | | 565 | 530 | 565 | 573 | 488 | 575 |
| Total | | 883 | 828.4 | 883.1 | 899.3 | 762.5 | 898.4 |
| Carboxyl equivalent (meq/g) | | 0.56 | 0.60 | 0.56 | 0.55 | 0.52 | 0.44 |
| Tertiary amino group (meq/g) | | 0.25 | 0.09 | 0.33 | 0.43 | 0.16 | 0.41 |
| Tertiary-N/COOH (equivalent ratio) | | 0.44 | 0.15 | 0.60 | 0.79 | 0.31 | 0.93 |
| Si equivalent (meq/g) | | 0.13 | 0.09 | 0.09 | 0.09 | 0.07 | 0.17 |
| Tertiary-N/Si (equivalent ratio) | | 1.91 | 1.01 | 3.80 | 4.85 | 2.41 | 2.41 |
| Initial bond strength | left for 10 seconds | D | D | D | D | D | D |
| | left for 15 seconds | B | B | B | B | B | C |
| | left for 20 seconds | B | B | B | A | B | B |
| | left for 25 seconds | B | A | A | A | B | B |
| | left for 30 seconds | A | A | A | E | A | A |
| | left for 35 seconds | E | E | E | | E | E |
| | left for 40 seconds | | | | | | |
| | left for 45 seconds | | | | | | |
| | left for 50 seconds | | | | | | |
| | left for 55 seconds | | | | | | |
| | left for 60 seconds | | | | | | |
| | left for 65 seconds | | | | | | |
| | left for 70 seconds | | | | | | |

**Table 3**

| | | Comparative Example | | | | | | |
|---|---|---|---|---|---|---|---|---|
| | | 1 | 2 | 3 | 4 | 5 | 6 | 7 |
| Polyol (A1-a) | | 150 | 150 | 150 | 150 | 150 | 150 | 100 |
| Polyol (A1-b) | | | | | | | | |
| Polyol (A1-c) | | 6 | 6 | 6 | | | | 5 |
| Polyol (A2-a) | | | | | | | | |
| Polyol (A2-b) | | 20 | 20 | 20 | 20 | 20 | 20 | 20 |
| Polyol (A3-a) | | | | | 6 | 6 | 6 | |
| Polyol (A3-b) | | | | | | | | |
| Polyol (A3-c) | | | | | | | | 50 |
| Polyisocyanate (A4-a) | | 75.0 | 75.0 | 75.0 | 71.2 | 71.2 | 71.2 | 72.2 |
| Amino-containing alkoxysilane (A5-a) | | 6.4 | | | | | | |
| Amino-containing alkoxysilane (A5-b) | | | | | | | | |
| Amino-containing alkoxysilane (A5-c) | | | 20.6 | 20.6 | | | | |
| Amino-containing alkoxysilane (A5-d) | | | | | 16.3 | | | |
| Amino-containing alkoxysilane (A5-e) | | | | | | | | 12.8 |
| Chain extender (A6-a) | | 5.7 | 5.7 | | | | 8.0 | |
| Chain extender (A6-b) | | | | | | | | |
| 1,4-Butanediol | | | | 3.0 | 3.0 | 4.2 | | 3.0 |
| Triethylamine | | 13.6 | 13.6 | 13.6 | 13.6 | 13.6 | 13.6 | 13.6 |
| Deionized water | | 492 | 517 | 507 | 493 | 464 | 478 | 486 |
| Total | | 768.7 | 807.9 | 795.2 | 773.1 | 729 | 746.8 | 762.6 |
| Carboxyl equivalent (meq/g) | | 0.51 | 0.49 | 0.49 | 0.51 | 0.54 | 0.53 | 0.51 |
| Tertiary amino group (meq/g) | | 0.00 | 0.00 | 0.00 | 0.19 | 0.20 | 0.20 | 0.10 |
| Tertiary-N/COOH (equivalent ratio) | | 0.00 | 0.00 | 0.00 | 0.37 | 0.37 | 0.37 | 0.19 |
| Si equivalent (meq/g) | | 0.14 | 0.13 | 0.13 | 0.13 | 0.00 | 0.00 | 0.13 |
| Si-N/Si (equivalent ratio) | | 0.00 | 0.00 | 0.00 | 1.43 | - | - | 0.71 |
| Initial bond strength | left for 10 seconds | D | D | D | D | D | D | D |
| | left for 15 seconds | D | D | D | D | D | D | D |
| | left for 20 seconds | D | D | D | D | D | D | D |
| | left for 25 seconds | D | D | D | D | D | D | D |
| | left for 30 seconds | D | D | D | C | D | C | D |
| | left for 35 seconds | C | C | C | C | C | C | C |
| | left for 40 seconds | E | E | C | B | B | E | B |
| | left for 45 seconds | | | B | B | B | | B |
| | left for 50 seconds | | | B | B | B | | B |
| | left for 55 seconds | | | B | B | B | | B |
| | left for 60 seconds | | | B | E | E | | B |
| | left for 65 seconds | | | E | | | | E |
| | left for 70 seconds | | | | | | | |

### (Evaluation)

The water-based silylated urethane compositions or adhesives according to Examples 1 to 13 and Comparative Examples 1 to 7 were evaluated on their initial bond strength by the following method of evaluating initial bond strength. The evaluation results are also shown in Tables 1 to 3.

### [Method of evaluating initial bond strength]

A sample water-based silylated urethane composition or adhesive was applied to an olefinic resin sheet to an amount of coating of about 80 g/m², was dried at 70°C for a predetermined time indicated in Tables 1 to 3, respectively, and an MDF (porous wood material) was then overlaid onto the surface carrying the dried composition or adhesive and was subjected to contact bonding using a hand roll, the peel bond strength (N/25-mm) of the resulting laminated article was determined according to JIS K 6854-2, and the initial bond strength of the sample was evaluated according to the following evaluation criteria.

### (Evaluation criteria)

A: The peel bond strength is 10 (N/25-mm) or more
B: The peel bond strength is 7.5 (N/25-mm) or more and less than 10 (N/25-mm)
C: The peel bond strength is 5 (N/25-mm) or more and less than 7.5 (N/25-mm)
D: The peel bond strength is less than 5 (N/25-mm)
E: The sample becomes tack-free and the adherends cannot be bonded

In the evaluation criteria in the test (method of evaluating initial bond strength), "A" means "Excellent", "B" means "Good", "C" means "Fair", and "D" means "Failure".

Tables 1 to 3 demonstrate that the water-based silylated urethane compositions according to Examples 1 to 13 and corresponding to the present invention develop adhesive power in 15 seconds after the application and can develop tackiness in a vary short time even though they are aqueous. Consequently, treating agents such as adhesives and coating agents using the water-based silylated urethane compositions according to the examples are aqueous and are thereby very safe. In addition, they can develop satisfactory tackiness in a short time and have excellent initial bond strength in spite of being aqueous.

The water-based silylated urethane composition (or adhesive) according to Example 10 had a loss on heating after drying at 70°C for twenty seconds of about 20 percent by mass and developed satisfactory tackiness, indicating that it has sufficient adhesiveness in this stage. In contrast, the water-based silylated urethane composition (or adhesive) according to Comparative Example 3 had a loss on heating after drying at 70°C for twenty seconds of about 20 percent by mass as in Example 10 but remained fully wet, indicating that it has no adhesiveness in this stage. These results show that the water-based silylated urethane compositions according to the examples show a small loss on evaporation of water, develop satisfactory tackiness even in initial stages of drying where the compositions still contain a large amount of water. Thus, they develop satisfactory tackiness in a short time and have excellent initial bond strength. In this connection, conventional adhesives do not develop tackiness in such early stages of drying.

The water-based silylated urethane composition (or adhesive) prepared according to Example 3 was applied to a slate board to an amount of coating of about 300 g/m², was left stand at 23°C and 55% relative humidity for five minutes, and a cork tile was then subjected to contact bonding with the slate board using a hand roll. The resulting article showed good adhesiveness without dislocation and lifting.

Separately, the water-based silylated urethane composition (or adhesive) prepared according to Example 3 was applied to an amount of coating of about 200 g/m² to one side of each of a soft base board (plinth) and a plaster board, was left stand at 23°C and 55% relative humidity for ten minutes, and the two adherends were laminated. The resulting article showed good adhesiveness without dislocation and lifting.

The water-based silylated urethane composition (or adhesive) prepared according to Example 3 was applied to an amount of coating of about 200 g/m² to one side of each of a decorative calcium silicate board and a plaster board and was subjected to forced drying for fifteen minutes. The two adherends were then laminated and were peeled immediately thereafter. The article showed good adhesiveness, since the plaster board was destroyed.

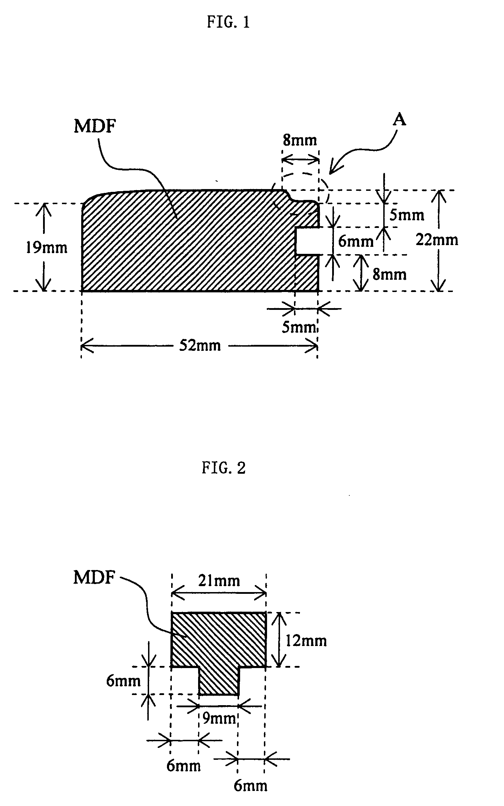

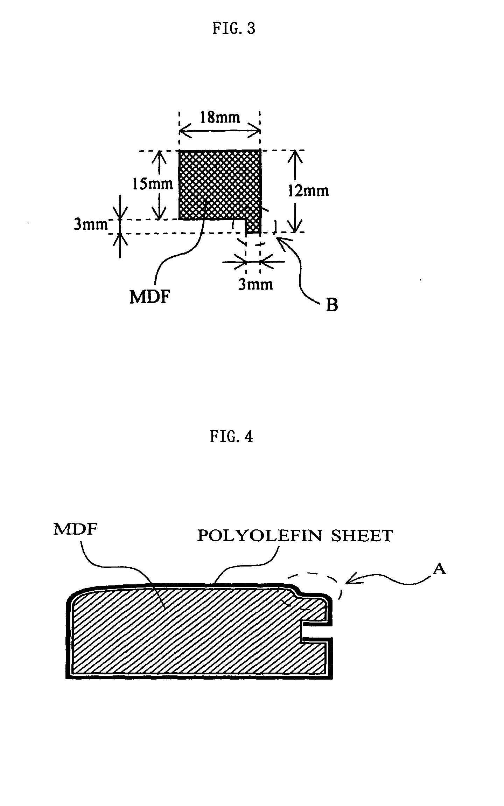

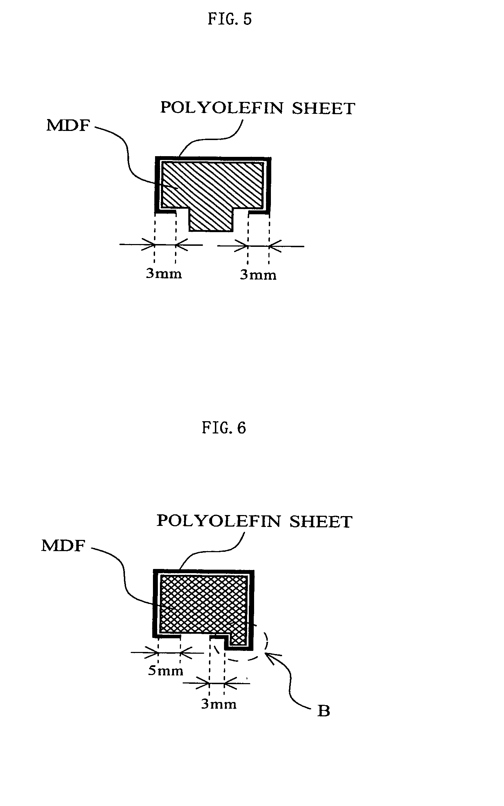

By using the water-based silylated urethane composition prepared according to Example 3 as an adhesive and using a product under the trade name of "Profile Laminator PL-300 CE" [a product of Marunaka Tekkosho Inc.] as a wrapping machine, a polyolefin sheet having a thickness of 50 µm and having a surface treated with a primer and printed in a wood-grain design was laminated onto a surface of each of MDFs having a length of 2.5 m and having a cross sectional shape of FIG. 1, 2, or 3 under the following lamination conditions so as to be the configuration in FIG. 4, 5, or 6. The adherends could be laminated in intimate contact with each other in accordance with the shape of the MDF without lifting of the sheet at a similar line speed (about 15 m/min. or more) to that in conventional two-component solvent-based urethane resin adhesives for use as adhesives for wrapping. More specifically, the MDF of FIG. 1, for example, has a so-called "reversed R-shaped portion" A, but the sheet could be laminated even onto the reversed R-shaped portion A as illustrated in FIG. 4 without any problem such as lifting of the sheet. The MDF of FIG. 2 was wrapped with the sheet with starting points about 3 mm inside the pillars or edges as illustrated in FIG. 5. The sheet could be laminated without any problem such as lifting of the sheet even at such a small inclusion of the sheet of about 3 mm. The MDF of FIG. 3 has a small protrusion B, but the sheet could be laminated even onto the small protrusion B as illustrated in FIG. 6 without any problem such as lifting of the sheet.

### (Lamination condition)

(1) In the case of MDF having a shape in FIG. 1:
   · Amount of coating: 80 µm (thickness on wetting: 80 g/m²)
   · Line speed: 15 m/min.
   · Temperature of drying oven: 60°C
(2) In the case of MDF having a shape in FIG. 2:
   · Amount of coating: 80 µm (thickness on wetting: 80 g/m²)
   · Line speed: 18 m/min.
   · Temperature of drying oven: 65°C
(3) In the case of MDF having a shape in FIG. 3:
   · Amount of coating: 80 µm (thickness on wetting: 80 g/m²)
   · Line speed: 18 m/min.
   · Temperature of drying oven: 65°C

FIGS. 1 to 3 are each a schematic cross-sectional view showing a cross-sectional shape of the MDF to which the polyolefin sheet is laminated using the wrapping machine, respectively. FIGS. 4 to 6 are each a schematic cross-sectional view of the MDF having the cross-sectional shape shown in FIG. 1, 2, or 3 being wrapped with the polyolefin sheet using the wrapping machine. FIGS. 4 to 6 illustrate a space or gap between the polyolefin sheet and the MDF for the convenience of easy understanding, but the polyolefin films in actuality are in intimate contact with the MDFs, respectively. In FIGS. 1 to 6, A represents the reversed R-shaped portion, and B represents the protrusion.

The above-wrapped article shown in FIG. 4 was subjected to the following high-temperature creep test to find to have a peel length after twenty-four hours of 0 mm, demonstrating that the article does not peel even after twenty-four hours and has good performance. Namely, the adhesive shows an adhesion capability equivalent to that of conventional two-component solvent-based adhesives, even though it is a one-component water-based adhesives.

### [High-temperature creep test]

The wrapped-wrapped article shown in FIG. 4 was notched with a width of 25 mm in a longitudinal direction and was placed in an atmosphere at 60°C. A static load of 500 gf/25-mm width (4.9 N/25-mm width) was applied at an angle of 90 degrees to the edge of the notches with a width of 25 mm in a longitudinal direction of the polyolefin sheet in the wrapped article, and the peel length was determined twenty-four hours later.

### Industrial Applicability

As is described above, the water-based silylated urethane composition according to the present invention has high safety, develops satisfactory tackiness in a short time and has excellent initial bond strength. In addition, it can exhibit productivity equivalent to that in the case of using solvent-based adhesives. The water-based silylated urethane composition according to the present invention is therefore very useful as water-based adhesives for wrapping and water-based contact adhesives.

## Claims

1. A water-based silylated urethane composition comprising following Components (A), (B) and (C):
(A) a urethane prepolymer containing an anionic group and a tertiary amino group and having a terminal alkoxysilyl group, the urethane prepolymer (A) being a reaction product of an anionic-group-free polyol compound (A1), an anionic-group-containing polyol compound (A2), a compound (A3) containing a tertiary amino group and an isocyanate-reactive group, a polyisocyanate compound (A4), an alkoxysilane compound (A5) containing an isocyanate-reactive group, and an amine-based chain extender (A6);
(B) a basic compound; and
(C) water

2. The water-based silylated urethane composition according to Claim 1, wherein the urethane prepolymer (A) containing an anionic group and a tertiary amino group and having a terminal alkoxysilyl group is an alkoxysilylated urethane prepolymer containing an anionic group and a tertiary amino group and being a reaction product prepared by allowing the anionic-group-free polyol compound (A1) to react with the anionic-group-containing polyol compound (A2), the compound (A3) containing a tertiary amino group and an isocyanate-reactive group, and the polyisocyanate compound (A4) to yield a urethane prepolymer containing an anionic group and a tertiary amino group; allowing the urethane prepolymer to react with the alkoxysilane compound (A5) containing an isocyanate-reactive group to partially alkoxysilylate the terminal isocyanate groups of the urethane prepolymer containing an anionic group and a tertiary amino group to thereby yield a urethane prepolymer containing an anionic group and a tertiary amino group and having partially alkoxysilylated terminals; and allowing residual isocyanate groups in the urethane prepolymer containing an anionic group and a tertiary amino group and having partially alkoxysilylated terminals to react with the amino group of the amine-based chain extender (A6) to thereby carrying out chain extension.

3. The water-based silylated urethane composition according to one of Claims 1 and 2, wherein the water-based silylated urethane composition comprises a water-based silanolated urethane prepolymer composition comprising the urethane prepolymer (A) containing an anionic group and a tertiary amino group and having a terminal alkoxysilyl group whose anionic group is neutralized by the basic compound (B) and whose terminal alkoxysilyl group is hydrolyzed by the water (C).

4. The water-based silylated urethane composition according to any one of Claims 1 to 3, wherein the anionic-group-containing polyol compound (A2) contains carboxyl group as the anionic group.

5. The water-based silylated urethane composition according to any one of Claims 1 to 4, wherein the anionic-group-containing polyol compound (A2) is a dimethylolalkanoic acid.

6. The water-based silylated urethane composition according to any one of Claims 1 to 5, wherein the compound (A3) containing a tertiary amino group and an isocyanate-reactive group is a tertiary amine compound containing plural isocyanate-reactive groups.

7. The water-based silylated urethane composition according to any one of Claims 1 to 6, wherein the compound (A3) containing a tertiary amino group and an isocyanate-reactive group is an N,N-bis(hydroxy-organic group)-N-alkylamine.

8. The water-based silylated urethane composition according to any one of Claims 1 to 7, wherein the alkoxysilane compound (A5) containing an isocyanate-reactive group is a secondary-amino-group-containing alkoxysilane compound as a reaction product of an alkoxysilane compound containing at least a primary amino group with an unsaturated carboxylic acid ester.

9. The water-based silylated urethane composition according to any one of Claims 1 to 8, wherein the alkoxysilane compound (A5) containing an isocyanate-reactive group is a secondary-amino-group-containing alkoxysilane compound as a reaction product of an alkoxysilane compound containing a primary amino group and a secondary amino group with an unsaturated carboxylic acid ester.

10. The water-based silylated urethane composition according to any one of Claims 1 to 9, wherein the urethane prepolymer (A) containing an anionic group and a tertiary amino group and having a terminal alkoxysilyl group has an anionic group content of 0.4 meq/g or more.

11. The water-based silylated urethane composition according to any one of Claims 1 to 10, wherein the urethane prepolymer (A) containing an anionic group and a tertiary amino group and having a terminal alkoxysilyl group has a tertiary amino group content of 0.15 meq/g or more.

12. The water-based silylated urethane composition according to any one of Claims 1 to 11, wherein the urethane prepolymer (A) containing an anionic group and a tertiary amino group and having a terminal alkoxysilyl group has a molar ratio of the tertiary amino group to the anionic group of 0.2 to 1.

13. The water-based silylated urethane composition according to any one of Claims 1 to 12, wherein the urethane prepolymer (A) containing an anionic group and a tertiary amino group and having a terminal alkoxysilyl group has a molar ratio of the tertiary amino group to the alkoxysilyl group of 1.0 to 5.5.

14. A water-based adhesive for wrapping, comprising the water-based silylated urethane composition according to any one of Claims 1 to 13.

15. A water-based contact adhesive, comprising the water-based silylated urethane composition according to any one of Claims 1 to 13.
